(19) Europäisches Patentamt / European Patent Office / Office européen des brevets

(11) **EP 2 824 450 B1**

(12) **EUROPÄISCHE PATENTSCHRIFT**

(45) Veröffentlichungstag und Bekanntmachung des Hinweises auf die Patenterteilung:
**28.02.2018   Patentblatt 2018/09**

(51) Int Cl.:
***G01N 25/20*** *(2006.01)*

(21) Anmeldenummer: **14001779.9**

(22) Anmeldetag: **20.05.2014**

(54) **VERWENDUNG EINES VERFAHRENS ZUR AUSWERTUNG EINES MESSERGEBNISSES EINER THERMISCHEN ANALYSE, COMPUTERPROGRAMMPRODUKT UND KOMBINATION EINER PRODUKTIONS- ODER VERARBEITUNGSANLAGE UND EINES SYSTEMS ZUR REALISIERUNG DER VERWENDUNG**

USE OF A METHOD FOR EVALUATING A MEASUREMENT RESULT OF A THERMAL ANALYSIS, COMPUTER PROGRAM PRODUCT AND COMBINATION OF A PRODUCTION OR PROCESSING PLANT AND A SYSTEM FOR IMPLEMENTING OF THE USE

UTILISATION D'UN PROCEDE D'EVALUATION D'UN RESULTAT D'UNE ANALYSE THERMIQUE, PRODUIT DE PROGRAMME INFORMATIQUE ET COMBINAISON D'UNE INSTALLATION DE PRODUCTION OU DE TRAITEMENT ET SYSTEME POUR LA REALISATION DE L'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2013   DE 102013011730**

(43) Veröffentlichungstag der Anmeldung:
**14.01.2015   Patentblatt 2015/03**

(73) Patentinhaber: **Netzsch Gerätebau GmbH
95100 Selb (DE)**

(72) Erfinder:
- **DENNER, Thomas
  95100 Selb (DE)**
- **BLUMM, Jürgen
  95100 Selb (DE)**
- **SCHAEFER, Otto Max
  95100 Selb (DE)**
- **HOLLERING, Markus
  95632 Wunsiedel (DE)**
- **HILPERT, Thilo
  95100 Selb (DE)**
- **FRENZL, Alexander
  95173 Schönwald (DE)**
- **LAUTERBACH, Stefan
  95100 Selb (DE)**
- **STROBEL, Andreas
  08209 Auerbach (DE)**
- **KAISER, Gabriele
  95100 Selb (DE)**
- **KNAPPE, Stephan
  95182 Döhlau (DE)**
- **PREUSS, Rolf
  37574 Einbeck (DE)**
- **GEBHARDT, Michael
  95100 Selb (DE)**
- **MOUKHINA, Elena
  95100 Selb (DE)**
- **SCHINDLER, Alexander
  95161 Leupoldsgrün (DE)**
- **GRADL, Matthias
  96145 Seßlach (DE)**
- **HERR, Gunther
  96253 Haarth (DE)**
- **NIJMEH, André
  96117 Merkendorf (DE)**
- **SCHMÖLZER, Stefan
  95188 Issigau (DE)**
- **MEYER, Markus
  86678 Ehingen (DE)**

(74) Vertreter: **Roos, Peter
  c/o Roospatent
  Noldinstrasse 7
  81545 München (DE)**

(56) Entgegenhaltungen:

- K M McCutcheon ET AL: "Thermal analysis of selected commercial thermoplastic resins (U)", , Juni 1991 (1991-06), XP055141071, Ottawa Gefunden im Internet: URL:http://www.dtic.mil/get-tr-doc/pdf?AD= ADA247711 [gefunden am 2014-09-18]
- O Jacobs ET AL: "Thermoanalyse an schadhaften Kunststoffbauteilen", , 20. Oktober 2011 (2011-10-20), XP055140855, Gefunden im Internet: URL:http://www.fhl-projekt-gmbh.de/kunstst offtechnik/pdf/thermoanalyse_an_schadhafte n_kunststoffbauteilen.pdf [gefunden am 2014-09-17]
- SHESH RAI ET AL: "Group classification based on high-dimensional data: application to differential scanning calorimetry plasma thermogram analysis of cervical cancer and control samples", OPEN ACCESS MEDICAL STATISTICS, 17. April 2013 (2013-04-17), Seite 1, XP055140961, DOI: 10.2147/OAMS.S40069
- POKOL G ET AL: "Description of the shape of thermoanalytical curves", ANALYTICA CHIMICA ACTA, ELSEVIER, AMSTERDAM, NL, vol. 167, 1 January 1985 (1985-01-01), pages 183-192, XP026590529, ISSN: 0003-2670, DOI: 10.1016/S0003-2670(00)84420-7 [retrieved on 1985-01-01]
- KEOGH E ET AL: "A PROBABILISTIC APPROACH TO FAST PATTERN MATCHING IN TIME SERIES DATABASES", PROCEEDINGS. INTERNATIONAL CONFERENCE ON KNOWLEDGE DISCOVERY ANDDATA MINING, XX, XX, 14 August 1997 (1997-08-14), pages 24-30, XP008029496,
- PERNG C-S ET AL: "Landmarks: a new model for similarity-based pattern querying in time series databases", DATA ENGINEERING, 2000. PROCEEDINGS. 16TH INTERNATIONAL CONFERENCE ON SAN DIEGO, CA, USA 29 FEB.-3 MARCH 2000, LOS ALAMITOS, CA, USA,IEEE COMPUT. SOC, US, 29 February 2000 (2000-02-29), pages 33-42, XP010378685, DOI: 10.1109/ICDE.2000.839385 ISBN: 978-0-7695-0506-0

**Beschreibung**

Die vorliegende Erfindung betrifft den Bereich der thermischen Analyse, insbesondere im Hinblick auf die Auswertung eines Messergebnisses einer thermischen Analyse.

Insbesondere betrifft die Erfindung eine Verwendung eines Verfahrens zur Auswertung eines Messergebnisses einer thermischen Analyse zur Qualitätssicherung bei der Produktion oder Verarbeitung von Gütern nach dem Oberbegriff des Anspruchs 1.

Der Begriff "thermische Analyse" bezeichnet hierbei jedes Verfahren, bei welchem eine Probe, die von bekannter oder unbekannter Zusammensetzung bzw. Beschaffenheit sein kann, in kontrollierter Weise einer Temperaturveränderung ausgesetzt wird, wobei während dieser Temperierung gleichzeitig eine oder mehrere physikalische Größen an der Probe gemessen und als temperaturabhängiges Messsignal aufgezeichnet werden.

Als unmittelbares Messergebnis einer thermischen Analyse ergibt sich somit wenigstens eine "Messkurve", die das betreffende Messsignal, also eine quantitative Repräsentation der betreffenden physikalischen Größe, in Abhängigkeit von der Temperierungstemperatur darstellt.

Bei der thermischen Analyse verwendbare Arten von Messungen bzw. Messsignalen sind aus dem Stand der Technik hinreichend bekannt, so dass hierauf nicht näher eingegangen wird. Lediglich beispielhaft seien als mögliche Messsignale das so genannte DSC-Signal (entsprechend der Wärmeflussrate), die Masse bzw. Massenveränderung sowie die Länge bzw. Längenänderung der Probe genannt. Zum allgemeinen Stand der Technik dieser Messmethode sei z. B. verwiesen auf die DE 198 25 472 B4, die DE 10 2009 038 343 A1 und die DE 10 2012 105 101 B3.

Die Auswertung von Ergebnissen von thermischen Analysen im Stand der Technik erfolgt mit einem relativ geringen Grad an Automatisierung. Üblicherweise muss ein Benutzer, unter Verwendung seiner Kenntnisse und Erfahrungen, zunächst physikalischen Effekten zuordenbare charakteristische Signaländerungen im Verlauf der betreffenden Messkurve erfassen und quantifizieren. In der Messkurve können als charakteristische Effekte z. B. Signalmaxima, Signalminima oder Signalstufen auftreten. Diese sich in der Messkurve zeigenden Effekte, die zumeist von Umwandlungen (z. B. Phasenübergängen) oder Reaktionen der Probe herrühren, sind häufig von zentralem Interesse bei der Auswertung der Messung. Stand der Technik ist hierbei, dass ein Anwender einer Auswertesoftware vorgibt, durch den Anwender selbst bestimmte Messkurvenpunkte bzw. -bereiche wie z. B. Signalmaxima zu markieren und/oder Kurvenintegrale in diesen vom Benutzer vorgegebenen Bereichen zu berechnen.

Bei einer nachfolgenden Interpretation der ausgewerteten Messkurve kommt sodann wieder die Erfahrung des Benutzers zum Einsatz, indem z. B. eine an einer Probe unbekannter Zusammensetzung gewonnene Messkurve mit ähnlichen Messkurven aus der Literatur oder aus dem Gedächtnis des Benutzers verglichen wird, bei denen bereits eine Interpretation existiert. Die Interpretation der unbekannten Messkurve geschieht dann zumeist durch Analogieschlüsse.

Die im Stand der Technik praktizierte Auswertung des Messergebnisses einer thermischen Analyse ist somit vergleichsweise kompliziert, wobei darüber hinaus das Auswertungsergebnis durch subjektive Annahmen und Entscheidungen des Anwenders mehr oder weniger stark beeinflusst wird. Bei einer Integration der thermischen Analyse als ein Messverfahren in einem komplexeren technischen Prozess (z. B. Produktion von Gütern) ist der hohe Zeitaufwand für die Auswertung von Messergebnissen nach der bekannten Methode ebenfalls sehr nachteilig.

Die Veröffentlichung K. M. McCutcheon et al, "Thermal analysis of selected commercial thermoplastic resins (U)", Defence Research Establishment Ottawa (Juni 1991) beschäftigt sich mit der Charakterisierung von thermoplastischen Harzen mittels thermischer Analyse und enthält diverse Zusammenstellungen von Materialparametern für eine Vielzahl von bestimmten Materialien, die durch thermische Analysen gewonnen wurden.

Die Veröffentlichung O. Jacobs et al, "Thermoanalyse an schadhaften Kunststoffbauteilen", VDI-Tagung "Schadensanalyse", 19./20. Oktober 2011, Würzburg, beschäftigt sich mit einer Kombination verschiedener Analysemethoden (DSC, TG-FTIR, DMA) zur Analyse schadhafter Kunststoffbauteile.

Die Veröffentlichung N. Rai Shesh et al, "Group classification based on High-dimensional data: application to differential scanning calorimetry plasma thermogram analysis of cervical cancer and control samples", Open Access Medical Statistics, 17. April 2013, Seiten 1-9, beschreibt ein Verfahren zur Datenreduktion und Modellierung von höherdimensionalen Datensätzen.

Die Veröffentlichung György Pokol et al, "Description of the shape of thermoanalytical curves", Analytica Chimica Acta, Elsevier, Amsterdam, NL, Bd. 167 (1985), Seiten 183-192, beschäftigt sich mit der Beschreibung von Peakformen zwecks Auswertung von Messergebnissen einer thermischen Analyse, insbesondere betreffend die Auswahl von Parametern zur Beschreibung von Peakformen in thermoanalytischen Messkurven.

Die Veröffentlichung E. Keogh et al, "A Probabilistic Approach to Fast Pattern Matching in Time Series Databases", Proceedings of the Third International Conference on Knowledge Discovery and Data Mining, 14. August 1997, Seiten 24-30, beschäftigt sich mit einer "linearen Segmentierung" von größeren Datensequenzen, d. h. einer Datenkompression, bei welcher eine aus vielen Messpunkten bestehende Messkurve in eine Zusammensetzung linearer Segmente wesentlich geringerer Anzahl umgewandelt wird.

Es ist eine Aufgabe der vorliegenden Erfindung, die eingangs genannte Verwendung hinsichtlich der praktischen Einsatzmöglichkeiten, der Auswertungsqualität und Auswertungsdauer zu verbessern, wobei die Auswertung bei hoher Auswertungsqualität insbesondere leistungsfähig, ökonomisch und rasch durchführbar sein soll, um z. B. neue Anwendungsgebiete für die thermische Analyse erschließen zu können, oder für bestehende Anwendungsgebiete die Praktikabilität des Einsatzes der thermischen Analyse zu verbessern.

Gemäß eines ersten Aspekts der Erfindung wird diese Aufgabe gelöst durch eine Verwendung nach Anspruch 1. Die abhängigen Ansprüche 2 bis 8 sind auf vorteilhafte Weiterbildungen gerichtet.

Bei der Erfindung wird ein Verfahren zur Auswertung eines Messergebnisses einer thermischen Analyse verwendet, bei welchem in einem System umfassend eine Vorrichtung zur Durchführung der thermischen Analyse unter Verwendung einer programmgesteuerten Rechnereinrichtung eine Vielzahl von quantitativen Wahrscheinlichkeiten der Übereinstimmung des Messergebnisses mit einer Vielzahl von vorab in der Rechnereinrichtung gespeicherten Datensatz berechnet wird, wobei diese Berechnungen der quantitativen Wahrscheinlichkeiten jeweils auf einem Vergleich von zuvor aus einer Messkurve der thermischen Analyse extrahierten Effektdaten mit entsprechenden gespeicherten Effektdaten des Datensatzes basieren.

Durch diese Maßnahme ist es vorteilhaft möglich, in weitgehend oder vollständig automatisierter Weise ein Auswertungsergebnis bereitzustellen. Im Rahmen der Auswertung werden hierbei eine Vielzahl von "Übereinstimmungswahrscheinlichkeiten" zwischen dem betreffenden Messergebnis und vorab gespeicherten Datensätzen, gewissermaßen jeweils repräsentierend ein Referenz-Messergebnis (z. B. Messergebnis einer thermischen Analyse einer bekannten Probe), geliefert.

Die Übereinstimmungswahrscheinlichkeit ist ein quantitatives Maß für die Ähnlichkeit des betreffenden Messergebnisses mit dem betreffenden Datensatz bzw. dem durch den Datensatz repräsentierten (echten oder fiktiven) Messergebnis.

Die Bedeutung des Begriffes "Ähnlichkeit" kann hierbei z. B. durch die eingesetzte Programmsteuerung (Software) fest vorgegeben oder durch den Benutzer durch Benutzereingaben veränderbar vorgesehen sein. Dasselbe gilt für die konkrete Methode der Quantifizierung dieser Ähnlichkeit, d. h. die genaue Art und Weise der Berechnung der Übereinstimmungswahrscheinlichkeit. Auch diese kann z. B. fest vorgegeben oder durch Benutzereingaben veränderbar vorgesehen sein.

Eine Grundidee der Erfindung besteht darin, nicht das unmittelbare Messergebnis der thermischen Analyse, also die Messkurve als solche einem Vergleich mit bekannten Messkurven zu unterziehen, sondern vielmehr zuvor "aus der Messkurve extrahierte Effektdaten" einem Vergleich mit entsprechenden gespeicherten Effektdaten zu unterziehen.

"Effektdaten" im Sinne der Erfindung sind hierbei eine quantitative Beschreibung der eingangs bereits erwähnten, bei der thermischen Analyse vorkommenden charakteristischen und lokal (d. h. in relativ begrenzten Temperaturbereichen) auftretenden Signaländerungen.

Das im Rahmen der erfindungsgemäßen Verwendung vorgesehene Verfahren kann somit als "effektbasiertes" Auswerteverfahren bezeichnet werden, aus welchem sich eine Vielzahl von Vorteilen insbesondere für die Anwendung auf Messergebnisse der thermischen Analyse ergeben. Die Effektbasiertheit des Verfahrens ermöglicht vorteilhaft einen hohen Grad an Automatisierung bei der Auswertung derartiger Messergebnisse.

So hat die Reduktion einer Messkurve auf ihre Effekte (und gegebenenfalls unten noch beschriebene "Effektmerkmale") eine hohe Effizienz und Geschwindigkeit des Verfahrens zur Folge. In der Praxis ermöglicht dies die Berechnung einer Vielzahl von Übereinstimmungswahrscheinlichkeiten zwischen einer unbekannten Messkurve und den z. B. in einer Datenbank in Form von Datensätzen gespeicherten bekannten Messkurven praktisch in Echtzeit, also im Wesentlichen noch während eine betreffende thermische Analyse läuft.

Der effektbasierte Vergleich, implizierend eine Einschränkung des bei einem Effektvergleich zu betrachtenden Temperaturbereiches (des Effektes) der unbekannten Messkurve ermöglicht eine qualitativ hochwertige Interpretation des betreffenden einzelnen Effektes unabhängig von dem übrigen Messkurvenverlauf bzw. den übrigen darin vorhandenen Effekten.

Das effekt- und gegebenenfalls merkmalsbasierte Verfahren benötigt als Eingangsgrößen nicht zwingend die betreffende "Messkurve" (Rohsignal). Prinzipiell genügt es, als auszuwertendes Messergebnis die erwähnten Effekte und gegebenenfalls deren Merkmale zu kennen. Dadurch können vorteilhaft in der Rechnereinrichtung auch Datensätze gespeichert werden, die lediglich auf Literaturinformationen bzw. Literaturwerten von Effekten beruhen.

In einer Ausführungsform beziehen sich die Effektdaten auf ein DSC-Signal, d. h. können als quantitative Beschreibung der lokal auftretenden charakteristischen Änderungen eines DSC-Signals betrachtet werden. Alternativ kann die Auswertung einer anderen, an der Probe gemessenen physikalischen Größe, insbesondere z. B. Masse bzw. Massenänderung oder Länge bzw. Längenänderung, erfolgen. In einer Weiterbildung kann sogar vorgesehen werden, dass die Effektdaten eine quantitative Beschreibung der Effekte von Messkurven mehrerer (verschiedener) physikalischer Größen darstellen.

Bei der Erfindung berücksichtigen die Effektdaten zumindest Minima, Maxima und Stufen des Messkurvenverlaufes. In einer Weiterbildung werden ferner Knicke des Messkurvenverlaufes berücksichtigt.

In einer anderen Weiterbildung werden ferner Maxima, Minima und Stufen im Verlauf der Ableitung des Messkurvenverlaufes berücksichtigt.

Bevorzugt besitzt die Rechnereinrichtung eine Speichereinrichtung, in welcher mehr als 20, insbesondere z. B. mehr als 100, Datensätze von Effektdaten für jeweils bekannte Materialien bzw. Proben gespeichert sind. Die Anzahl der gespeicherten Datensätze kann zweckmäßigerweise veränderbar vorgesehen sein, etwa durch entsprechende Benutzereingaben zum Hinzufügen oder Löschen einzelner Datensätze. Insbesondere kann eine Hinzufügung von Datensätzen in eine Datenbank der Rechnereinrichtung erfolgen, welche auf Basis einer Extraktion der benötigten Effektdaten aus einer Messkurve erzeugt werden, welche durch eine thermische Analyse einer Probe von bekannter Zusammensetzung aufgezeichnet wurde.

Der Vergleich der Effektdaten, einerseits aus der betreffenden Messkurve extrahiert und andererseits durch den betreffenden Datensatz definiert, liefert als Ergebnis ein Maß für die Ähnlichkeit bzw. die Übereinstimmungswahrscheinlichkeit von Effekten und somit letztlich der betrachteten Messkurven (einerseits unbekannte Messkurve und andererseits durch die Datensätze dargestellte echte oder fiktive Messkurven).

Zur Durchführung des Vergleiches kann prinzipiell vorteilhaft auf Algorithmen zurückgegriffen werden, die als solche aus dem Stand der Technik bekannt sind, beispielsweise numerische bzw. analytische Algorithmen, oder auch statistische Algorithmen. Geeignete numerische Algorithmen können z. B. auf neuronalen Netzwerken oder der Fuzzy-Logik basieren. Statistische Algorithmen können z. B. nach dem Maximum-Likelyhood-Prinzip arbeiten.

Wie bereits erwähnt können derartige Algorithmen im Rahmen der Erfindung fest vorgegeben oder auch durch Benutzereingaben strukturell und/oder nur in einzelnen Parametern (z. B. Schwellwerte etc.) veränderbar vorgesehen sein.

Durch den effekt- und gegebenenfalls merkmalsbasierten Charakter des im Rahmen der erfindungsgemäßen Verwendung vorgesehenen Auswerteverfahrens können die erwähnten, an sich bekannten Vergleichsalgorithmen im Rahmen der Erfindung vorteilhaft z. B. dadurch mit dem Wissen bzw. Annahmen des Benutzers kombiniert werden, indem dieser bei der Auswertung durch eine Benutzereingabe vorgibt, ob das auszuwertende Messergebnis eine Reinsubstanz-Messkurve oder eine Multikomponenten-Messkurve betrifft. In letzterem Falle ergibt sich die Messkurve der thermischen Analyse als Superposition von zugrundeliegenden Reinsubstanz-Messkurven. Die entsprechende Benutzereingabe kann somit vorteilhaft zur Anpassung des verwendeten Vergleichsalgorithmus genutzt werden. Beispielsweise stehen bei Verwendung eines Mehrkomponenten-Algorithmus die berechneten Übereinstimmungswahrscheinlichkeiten in Relation mit den mengenmäßigen Anteilen der Reinsubstanzen.

Ein weiterer in der Praxis der thermischen Analyse sehr bedeutender Vorteil der Erfindung besteht darin, dass bei der Erfindung der bei den Berechnungen verwendete Vergleichsalgorithmus so gestaltet ist, dass unterschiedlichen Effekttypen und/oder deren Effektmerkmalen unterschiedliche mathematische Gewichte und damit unterschiedlich starke Bedeutungen zugewiesen werden können. Diese unterschiedlichen mathematischen Gewichte können fest vorgegeben oder durch Benutzereingaben veränderbar vorgegeben sein. Es lässt sich dadurch die Bedeutung der "Ähnlichkeit" von verglichenen Messkurven bzw. Effektdaten untereinander vorteilhaft steuern.

Durch Benutzereingaben variable Parameter des Algorithmus erlauben es, das Auswerteverfahren auf unterschiedliche Aufgabenstellungen hin optimal anzupassen, indem unterschiedliche Parametersätze für verschiedenen Aufgabenstellungen verwendet werden.

Beispielsweise kann im Falle der Auswertung von Messergebnissen an (teil)kristallinen Proben endothermen Schmelzeffekten ein höheres Gewicht zugewiesen werden als Glasübergängen, da vor allem teilkristalline Proben Schmelzeffekte zeigen. Im Gegensatz dazu können z. B. bei amorphen, also nicht-kristallinen Proben die Glasübergänge mathematisch stärker gewichtet werden als die Schmelzeffekte.

Bei einer Veränderbarkeit der erwähnten Parameter des Algorithmus ergibt sich weiterhin der Vorteil, dass das Auswerteverfahren wie eine definierbare Datenbanksuche verwendet werden kann. Die Parameter des Algorithmus können als Filterkriterien aufgefasst werden, wodurch die durch die Datensätze definierten Messkurven in einer Datenbank gezielt nach den Filterkriterien sortiert werden können.

Beispielsweise könnte man z. B. alle Eigenschaften eines Schmelzeffektes der sich in einer DSC-Messkurve durch ein lokales Maximum (bei entsprechender Definition des DSC-Signales, d. h. mit "exotherm nach unten") bemerkbar macht als unwichtig eingestuft werden, außer der Fläche (Kurvenintegral) des entsprechenden "Schmelzpeaks", welche die Schmelzenthalpie widerspiegelt. In diesem Fall können die durch die Datensätze in einer Datenbank repräsentierten Messkurven z. B. nach der Größe ihrer Schmelzenthalpie sortiert angeordnet werden.

Die erwähnten Parameter des oder der beim Vergleich eingesetzten Algorithmen können wie erwähnt durch den Benutzer veränderbar vorgesehen sein. Alternativ oder zusätzlich kann eine solche Parameterveränderung auch in selbstlernender Weise vorgesehen sein. Mit letzterem ist gemeint, dass sich die Parameter z. B. selbstständig (allein durch eine eingesetzte Software gesteuert) verändern, z. B. unter Berücksichtigung der in der Rechnereinrichtung gespeicherten Datensätze. Darüber hinaus können jedoch auch Interaktionen des Benutzers zur indirekten Veränderung der Parameter führen. Interaktion meint hier das Abgeben eines Urteils bezüglich der Ähnlichkeit der betreffenden Messkurve mit einer gespeicherten Messkurve oder der aktiven (durch den Benutzer bewirkten) Zuordnung einer auszuwertenden Messkurve zu einer von bevorzugt mehreren vorab definierten Klassen von Datensätzen in der Rechnereinrichtung.

In einer Ausführungsform der Erfindung ist vorgesehen, dass die Effektdaten für jeden Effekt als ein jeweiliger Merkmalsvektor dargestellt sind, von welchem Vektorkomponenten bestimmte Eigenschaften des betreffenden Effektes quantitativ repräsentieren.

Bei der Erfindung werden mehrere verschiedene Effekttypen berücksichtigt, wobei die Merkmalsvektoren unterschiedlicher Effekttypen zweckmäßigerweise unterschiedliche "bestimmte Eigenschaften" (je nach Effekttyp) quantifizieren.

Beispielsweise können hierbei für den Effekttyp "Maximum" und den Effekttyp "Minimum" als Vektorkomponenten insbesondere eine oder mehrere oder sämtliche der folgenden Eigenschaften verwendet werden: Fläche (Kurvenintegral), Temperatur des Maximums bzw. Minimums im engeren Sinne (d. h. Temperatur, an welcher der betreffende Signalwert maximal bzw. minimal wird), Anfangstemperatur, Endtemperatur.

Bei dem Effekttyp "Stufe" können als Vektorkomponenten beispielsweise insbesondere eine oder mehrere oder sämtliche der folgenden Eigenschaften verwendet werden: Anfangstemperatur, Mitteltemperatur, Endtemperatur, Stufenhöhe.

Es versteht sich, dass eine "Stufe" in einem Messkurvenverlauf in der Regel eine stetige Signaländerung involviert, so dass der im Rahmen der Erfindung mit diesem Begriff bezeichnete Effekt, anders als im streng mathematischen Sinne, eine mehr oder weniger große Breite besitzt. Die erwähnten Eigenschaften "Anfangstemperatur" und "Endtemperatur" als Merkmale der Signalstufe tragen diesem Umstand Rechnung.

Hinsichtlich der vorstehend genannten Eigenschaften "Anfangstemperatur" und "Endtemperatur" ist anzumerken, dass diese Temperaturen in verschiedener Weise definiert werden können. In dieser Hinsicht ist gemäß einer Ausführungsform vorgesehen, dass für wenigstens einen Effekttyp eine Charakterisierung durch wenigstens zwei (verschieden definierte) Anfangstemperaturen und/oder zwei (verschieden definierte) Endtemperaturen erfolgt. Auf diese Möglichkeit wird unten mit Bezug auf ein Ausführungsbeispiel noch näher eingegangen.

In einer vorteilhaften Weiterbildung des Auswerteverfahrens umfasst dieses ferner den Schritt einer Extraktion der Effektdaten aus der Messkurve der thermischen Analyse unter Verwendung der Rechnereinrichtung.

Durch diese Weiterbildung wird das Auswerteverfahren dazu geeignet, als Eingangsgröße das unmittelbare Messergebnis der thermischen Analyse, also die "Messkurve" selbst verarbeiten zu können. Insofern ist diese Weiterbildung besonders bei der gemäß der Erfindung vorgesehenen Implementierung des Auswerteverfahrens in einer oder in Verbindung mit einer Vorrichtung zur Durchführung der thermischen Analyse interessant.

Gemäß eines weiteren Aspekts der Erfindung ist eine Kombination umfassend eine Produktions- oder Verarbeitungsanlage zur Produktion oder Verarbeitung von Gütern und ein System vorgesehen, wobei das System sowohl eine Vorrichtung zur Durchführung einer thermischen Analyse als auch eine Rechnereinrichtung, die zur Auswertung eines Messergebnisses der thermischen Analyse ausgebildet und integriert in oder verbunden mit der Vorrichtung ist, umfasst.

Insbesondere kann das System z. B. eine dergestalt modifizierte Vorrichtung zur Durchführung einer thermischen Analyse darstellen, dass eine programmgesteuerte Rechnereinrichtung der Vorrichtung, die ohnehin zur Durchführung (Betriebssteuerung) der thermischen Analyse verwendet wird (insbesondere Steuerung der Probentemperierung), zusätzlich zur Durchführung des bei der erfindungsgemäßen Verwendung vorgesehenen Auswerteverfahrens genutzt wird.

Die Durchführung der Extraktion der Effektdaten aus der Messkurve kann in zwei Teilschritten, bevorzugt jeweils unter Verwendung der Rechnereinrichtung, erfolgen, wobei in einem ersten Teilschritt eine "Segmentierung der Messkurve" und in einem zweiten Teilschritt die "Auswertung der Effekte" (Merkmalsextraktion) auf Basis der zuvor erhaltenen Segmente der Messkurve erfolgt.

Der Teilschritt "Segmentierung der Messkurve" bedeutet, dass die Messkurve in für die weitere Auswertung sinnvolle Bereiche unterteilt wird, d. h. in Bereiche, in denen jeweils ein Effekt vorhanden ist, und in Bereiche, in denen kein Effekt vorhanden ist. Die Bereiche werden hierbei durch einen jeweiligen Temperaturbereich definiert. Mit anderen Worten werden in diesem Teilschritt, beispielsweise mittels eines auf der Rechnereinrichtung laufenden speziellen Segmentierungsalgorithmus, die jeweiligen Effekte in der Messkurve identifiziert und voneinander abgegrenzt.

Die Funktion des verwendeten Segmentierungsalgorithmus kann z. B. auf der Berücksichtigung von vorbestimmten Schwellwerten des Messsignals beruhen. Durch Detektion von Schwellwertüberschreitungen bzw. -unterschreitungen des Messsignals lassen sich insbesondere die Effekttypen "Maximum" und "Minimum" in einfacher Weise erkennen und in ihrer temperaturmäßigen Ausdehnung (z. B. durch Anfangstemperatur und Endtemperatur) quantifizieren.

In einer Ausführungsform ist vorgesehen, dass durch den Schritt "Segmentierung der Messkurve" für jeden Effekt eine "relativ niedrig liegende" Anfangstemperatur und eine "relativ hoch liegende" Endtemperatur berechnet wird, wobei der Bereich von Anfangstemperatur bis Endtemperatur den Messkurvenbereich definiert, in dem ein Effekt vorhanden ist bzw. "identifiziert" wird. In einer Weiterbildung erfolgt im erwähnten zweiten Teilschritt "Auswertung der Effekte" die Berechnung einer weiteren, "höher liegenden" Anfangstemperatur und einer weiteren, "niedriger liegenden" Endtemperatur, welche sodann im zweiten Teilschritt als Vektorkomponenten in einen betreffenden "Merkmalsvektor" eingehen können. Dies schließt nicht aus, dass alternativ oder zusätzlich die erstgenannten Anfangs- und Endtemperaturen (welche einen größeren Temperaturbereich definieren) als Komponenten eines solchen Merkmalsvektors verwendet werden.

Alternativ oder zusätzlich zur Nutzung von Schwellwerten für das Messsignal können auch Schwellwerte für die Ableitung (Differenziellquotient) des Messsignals verwendet werden. Der Einsatz dieses Kriteriums kann z. B. in redundanter Weise ebenfalls zur Identifizierung bzw. genaueren Quantifizierung von Maxima und Minima nutzbringend sein. Darüber hinaus ist dieses Kriterium jedoch vor allem zur Identifizierung des Effekttyps "Stufe" sehr vorteilhaft. Dies deshalb, weil für eine Stufe charakteristisch ist, dass sich im Verlauf der Temperaturänderung die Ableitung des Messignals zunächst nennenswert in einer Richtung (positives oder negatives Vorzeichen) ändert, und sich sodann, nach Durchlaufen eines Wendepunktes, in entgegengesetzter Richtung nennenswert ändert. Beide Charakteristika lassen sich in einfacher Weise z. B. durch eine Auswertung (z. B. hinsichtlich Schwellwertüberschreitung) der ersten Ableitung des Messignals und/oder der zweiten Ableitung des Messignals erkennen. Eine Stufenhöhe lässt sich durch Mitberücksichtigung der Differenz der Messignalwerte einerseits am Beginn und andererseits am Ende der Stufe erkennen und quantifizieren.

Der Effekttyp "Knick", den man auch als "Knie" bezeichnen könnte, ist gekennzeichnet durch eine nenneswerte, mehr oder weniger sprunghafte Änderung der ersten Ableitung des Messignals an der betreffenden Stelle im Messsignalverlauf. Dies ist gleichbedeutend mit einem mehr oder weniger ausgeprägten Extremum der zweiten Ableitung des Messignals an dieser Stelle.

Insofern ist insbesondere die Auswertung der ersten und/oder der zweiten Ableitung des Messignals außerdem sehr vorteilhaft zur Identifizierung von Effekten des Typs "Knick" bzw. "Knie" im Rahmen des Segmentierungsalgorithmus einsetzbar.

Der zweite Teilschritt "Auswertung der Effekte" (Extraktion der Merkmale) kann ebenfalls teilweise oder vollständig automatisiert durch einen auf der Rechnereinrichtung laufenden Extraktionsalgorithmus durchgeführt werden. Bei diesem Teilschritt werden die im vorangegangenen Teilschritt identifizierten und anhand ihrer jeweiligen Temperaturbereiche abgegrenzten Effekte hinsichtlich ihrer (genaueren) "Eigenschaften" ausgewertet und durch Quantifizierung dieser Eigenschaften "Merkmale" gebildet. Mit anderen Worten werden durch diesen Teilschnitt die Effektdaten erzeugt (berechnet). Diese so erhaltenen Merkmale können dann Vektorkomponenten des bereits erwähnten Merkmalsvektors bilden.

In einer softwaretechnischen Realisierungsvariante ist vorgesehen, dass als eine weitere Vektorkomponente des Merkmalsvektors ein Wert vorgesehen ist, der den Effekttyp charakterisiert bzw. codiert, auf welchen sich dieser Merkmalsvektor bezieht. Beispielsweise könnte als jeweils erste Vektorkomponente einer der Werte 1, 2 und 3 vergeben werden, um damit entsprechend dem Wert die Effekttypen Maximum, Minimum und Stufe zu codieren. In einer alternativen Ausführungsform wird der Effekttyp nicht als eigens vorgesehene Vektorkomponente des Merkmalsvektors berücksichtigt, sondern durch irgendeine Art von softwaretechnisch anderweitig realisierter "Kennzeichung" des betreffenden Merkmalsvektors. Schließlich ist es auch möglich, den Effekttyp der einzelnen Merkmalsvektoren dadurch zu berücksichtigen, dass die Merkmalsvektoren für die verschiedenen Effekttypen in dementsprechend verschiedenen Bereichen (z. B. Speicherbereich) der Rechnereinrichtung gespeichert werden.

Die bei diesem zweiten Teilschritt betrachteten "Eigenschaften" können wie bereits erwähnt vom betreffenden Effekttyp abhängen. Diesbezüglich wird auf die weiter oben bereits gegebenen Erläuterungen verwiesen. Für den Effekttyp "Maximum" oder "Minimum" kann insbesondere z. B. die Fläche (Kurvenintegral) eine wichtige zu berücksichtigende Eigenschaft darstellen, wobei der Wert der Fläche dann das entsprechende Merkmal dieser Eigenschaft bildet. Für den Effekttyp "Stufe" ist hingegen insbesondere z. B. die Stufenhöhe eine wichtige zu berücksichtigende Eigenschaft. Der Wert dieser Stufenhöhe ist dann das entsprechende Merkmal, welches als Komponente in den Merkmalsvektor für den betreffenden Effekt eingeht.

Die vorstehend erläuterten zwei Teilschritte des Schrittes "Extraktion der Effektdaten" können jeweils halbautomatisch, d. h. softwareunterstützt, oder vollautomatisch, d. h. komplett mittels Software durchgeführt werden. Die Effektmerkmale, welche allgemein insbesondere z. B. die temperaturmäßige Position, die Größe und die Form der betreffenden Effekte beschreiben, werden bevorzugt für jeden einzelnen Effekt in einem eigenen Merkmalsvektor abgelegt.

Vorstehend wurde der Schritt "Extraktion der Effektdaten" als zusammengesetzt aus den zwei Teilschritten "Segmentierung der Messkurve" und "Auswertung der Effekte" (Merkmalsextraktion) beschrieben. In einer vereinfachten Ausführung des Auswerteverfahrens wird die Extraktion der Effektdaten in vergröberter Weise lediglich durch den Schritt "Segmentierung der Messkurve" realisiert. Die damit erhaltenen Effektdaten geben dann für jeden Effekt zumindest (bzw. nur) den Effekttyp sowie eine temperaturmäßige Ausdehnung des Effektes (z. B. definiert durch eine Anfangstemperatur und eine Endtemperatur) an. Die Effektdaten geben dann gewissermaßen im Wesentlichen lediglich das Vorhandensein eines Effektes (mitsamt Effekttyp) an bestimmten Stellen der Messkurve an. Im Allgemeinen bevorzugt und vorteilhafter ist jedoch die Hinzunahme des beschriebenen zweiten Teilschrittes, mit welchem zusätzliche Merkmale der einzelnen Effekte quantifiziert und in den Effektdaten berücksichtigt werden (z. B. durch wenigstens eine weitere Anfangstemperatur, eine weitere Endtemperatur, eine Mittentemperatur, ein oder mehrere Kurvenintegrale etc.).

In einer Ausführungsform des Schrittes "Extraktion der Effektdaten" werden durch den betreffenden Algorithmus insbesondere Maxima, Minima und Stufen im Verlauf der Messkurve gesucht und erfasst. Optional kann der Algorithmus z. B. zur Erfassung von Maxima, Minima und Stufen im Verlauf der Ableitung des Messsignals ausgebildet sein.

In einer Weiterbildung der Erfindung, die ebenfalls vor allem bei einer Integration der Rechnereinrichtung in einem System bzw. in einer Vorrichtung zur Durchführung der thermischen Analyse besonders vorteilhaft ist, umfasst das Auswerteverfahren ferner den Schritt einer "Vorverarbeitung der Messkurve" unter Verwendung der Rechnereinrichtung, bevor die oben beschriebene Extraktion der Effektdaten erfolgt.

Der Begriff "Vorverarbeitung der Messkurve" soll bedeuten, dass eine ummittelbar aus der thermischen Analyse hervorgegangene Messkurve zunächst einem oder mehreren der folgenden Verarbeitungsschritte unterzogen wird: Glätten (z. B. durch gleitende Mittelwertbildung), Filtern (z. B. hinsichtlich bestimmter "Frequenzkomponenten" im Temperaturbereich), Elimination bestimmter (unwichtiger) Bereiche (z. B. am Beginn und/oder am Ende des Gesamttemperaturbereiches, um für die nachfolgend auszuwertende Messkurve eine definierte Starttemperatur bzw. Endtemperatur vorzusehen), Subtraktion einer "Leerkurve" der betreffenden Vorrichtung zur thermischen Analyse (Der Begriff "Leerkurve" bezeichnet hierbei den Verlauf des betreffenden Messsignals, wenn die Vorrichtung zur thermischen Analyse ohne darin eingesetzte Probe betrieben wird.), Normierung auf einheitliche Messbedingungen (z. B. hinsichtlich einer einheitlichen Probenmasse oder einheitlichen Heizrate, wobei diese Normierung z. B. durch einen anhand eines geeigneten physikalischen Modells gewonnenen mathematischen Normierungsalgorithmus realisiert sein kann).

Bei der Erfindung umfasst das Auswerteverfahren ferner den Schritt einer jeweiligen Zuordnung der Messergebnisse zu einer von mehreren vorab definierten Qualitätsklassen unter Verwendung der Rechnereinrichtung, wobei diese Zuordnung auf dem Ergebnis der Berechnung der Vielzahl von quantitativen Übereinstimmungswahrscheinlichkeiten basiert.

Eine derartige Klassenzuordnung ist z. B. besonders vorteilhaft, falls die Auswertung in einem System der oben beschriebenen Art, d. h. unmittelbar in Verbindung mit der thermischen Analyse selbst, durchgeführt wird. Mittels des Systems durchgeführte thermische Analysen können dann rasch und durch das System dahingehend ausgewertet werden, ob die vermessenen Proben die Kriterien bestimmter Klassen erfüllen oder nicht.

Die bei der Erfindung vorgesehenen Qualitätsklassen betreffen eine durch den Anwender definierte Qualität der vermessenen Probe. Beispielsweise könnten hierfür Klassen wie "hohe Qualität", "mittlere Qualität" und "niedrige Qualität" vorgesehen sein. Zusätzlich können vorab auch eine oder mehrere andere Klassen definiert werden, z. B. Materialklassen wie "Polymer der Art X", "Polymer der Art Y" etc. Weitere Beispiele für Materialklassen sind z. B. "Thermoplaste" oder "Elastomere".

Bei der gemäß der Erfindung vorgeschlagenen Verwendung eines Auswerteverfahrens der beschriebenen Art im Bereich der Qualitätssicherung bei der Produktion oder Verarbeitung von Gütern sind folgende Schritte vorgesehen: Zumindest stichprobenweise Durchführung einer thermischen Analyse an produzierten bzw. bearbeiteten Gütern und Auswertung der Messergebnisse der thermischen Analyse mittels eines Verfahrens der beschriebenen Art (wobei eine Zuordnung eines jeweiligen Messergebnisses zu einer von mehreren Qualitätsklassen erfolgt).

In einer Weiterbildung dieser Verwendung des Auswerteverfahrens ist vorgesehen, dass abhängig vom Ergebnis der Auswertung in automatischer Weise (durch die Rechnereinrichtung initiiert) in den betreffenden Prozess (Produktion bzw. Verarbeitung) eingegriffen wird. Bei diesem Eingriff kann es sich z. B. um eine gesteuerte Veränderung der Betriebsweise (z. B. Betriebsparameter) wenigstens einer im Prozess eingesetzten Maschine handeln (bis hin z. B. zum Stoppen der Maschine). Alternativ oder zusätzlich kann der Eingriff darin bestehen, dass bestimmte produzierte bzw. verarbeitete Güter als Ausschuss aus dem Prozess "ausgeschleust" werden.

Die Erfindung wird nachfolgend anhand von Ausführungsbeispielen mit Bezug auf die beigefügten Zeichnungen weiter beschrieben. Es stellen dar:

Fig. 1     ein Ablaufdiagramm eines Verfahrens zur automatischen Erkennung und Klassifizierung von Messkurven, die durch thermische Analyse von Proben gewonnen wurden,

Fig. 2     eine beispielhafte, als unmittelbares Messergebnis einer thermischen Analyse gewonnene Messkurve,

Fig. 3     die Messkurve, die sich nach einer Vorverarbeitung der Messkurve von Fig. 2 ergibt,

Fig. 4     eine Darstellung zur Erläuterung einer Segmentierung der Messkurve von Fig. 3 zwecks Identifizierung von darin enthaltenen Effekten,

Fig. 5     eine Darstellung zur Erläuterung einer Extraktion von Merkmalen, d. h. quantifizierten Eigenschaften der zuvor in der Messkurve von Fig. 3 identifizierten Effekte,

Fig. 6      eine Darstellung zur Erläuterung der Durchführung eines Vergleiches zwischen aus der Messkurve extrahierten Effektdaten mit entsprechenden vorab in einer Rechnereinrichtung gespeicherten Effektdaten,

Fig. 7 bis 10      Darstellungen zur Erläuterung verschiedener Varianten eines Vergleiches zwischen einem unbekannten Messergebnis mit einer Mehrzahl von in einer Datenbank gespeicherten bekannten Messergebnissen,

Fig. 11      eine schematische Darstellung eines Systems zur Durchführung einer thermischen Analyse und Auswertung von damit gewonnenen Messergebnissen,

Fig. 12      das System von Fig. 11 in einer abgewandelten Ausführung, und

Fig. 13      eine schematische Darstellung eines Systems der Gestaltung von Fig. 12 in einer Verwendung für die Qualitätssicherung in einem industriellen Prozess.

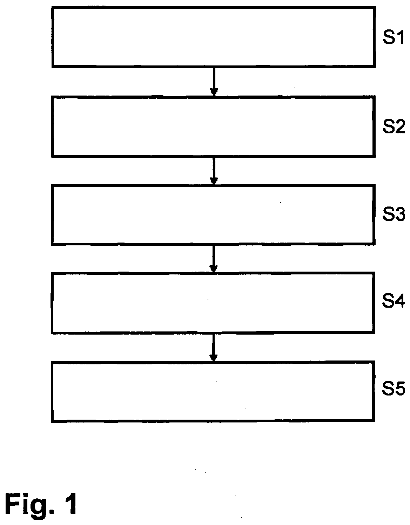

Fig. 1 zeigt ein Ablaufdiagramm eines Auswerteverfahrens gemäß eines Ausführungsbeispiels.

Das in Fig. 1 dargestellte Verfahren zur Auswertung eine Messergebnisses einer thermischen Analyse umfasst die nachfolgend beispielhaft näher beschriebenen Schritte S1 bis S5, die beispielsweise vollautomatisch (mittels einer Rechnereinrichtung), oder zumindest teilautomatisiert, noch während oder nach Ende einer thermische Analyse-Messung ablaufen können.

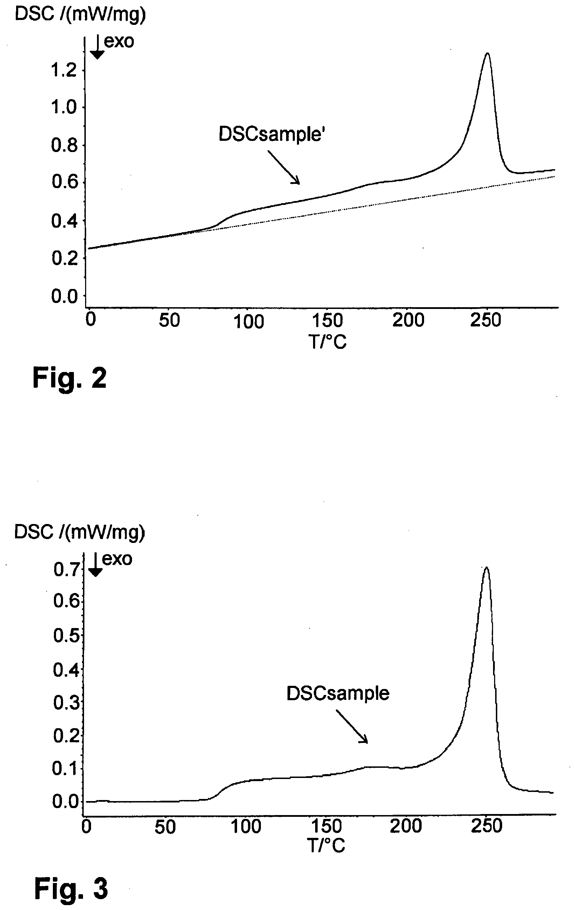

Fig. 2 zeigt eine beispielhafte, als unmittelbares Messergebnis einer thermischen Analyse an einer Probe unbekannter Zusammensetzung gewonnene Messkurve DSCsample'. Im dargestellten Beispiel handelt es sich um ein von einer Temperierungstemperatur T abhängiges, so genanntes DSC (Dynamische Differenzkalorimetrie, engl. "differential scanning calorimetry")-Signal DSC'.

Wie aus Fig. 2 ersichtlich, wurde die Messkurve DSCsample' im Verlauf einer Aufheizung der Probe von etwa 0°C bis etwa 300°C gewonnen. Die Messkurve DSCsample' besteht im Beispiel aus einer größeren Anzahl N von Messpunkten (z. B: N > 100), d.h. Wertepaaren aus Temperaturen $T(i)$ und zugehörigen Signalwerten DSC'(i), wobei $i = 1, 2, 3, ... N$.

Mit Bezug auf Fig. 1, erfolgt im Schritt S1 zunächst eine Vorverarbeitung der Messkurve DSCsample'.

Die Vorverarbeitung kann insbesondere das Subtrahieren der so genannten Leerkurve des Messgeräts umfassen, alternativ oder zusätzlich jedoch auch z. B. ein Glätten, Mitteln oder Filtern der Messkurve, das Weglassen unwichtiger Bereiche oder eine mathematische Normierung der Messkurve auf einheitliche Messedingungen (z. B. hinsichtlich Probenmasse und/oder Heizrate).

In Fig. 2 gestrichelt eingezeichnet ist neben der "unbehandelten" (unmittelbar gewonnenen) Messkurve DSCsample' (durchgezogene Linie) auch die Leerkurve der betreffenden Analysevorrichtung.

Fig. 3 zeigt eine korrigierte Messkurve DSCsample, die sich nach einer Vorverarbeitung der Messkurve DSCsample' von Fig. 2 ergibt. Diese Vorverarbeitung (Schritt S1) umfasst hierbei die Subtraktion der Leerkurve (in Fig. 2 gestrichelt) von der ursprünglichen Messkurve DSCsample (in Fig. 2 durchgezogen).

Mit Bezug auf Fig. 1, erfolgt im Schritt S2 sodann eine Segmentierung der Messkurve DSCsample.

Segmentierung meint die Unterteilung der Messkurve in für die nachfolgende Verarbeitung sinnvolle Bereiche. Dies bedeutet, dass physikalischen Effekten zuordenbare charakteristische Signaländerungen im Verlauf der Messkurve DSCsample zumindest hinsichtlich ihrer temperaturmäßigen Position sowie ihres "Typs" erfasst bzw. identifiziert werden.

Ganz allgemein können in der Messkurve als charakteristische Effekte z. B. insbesondere lokale Maxima, Minima oder Stufen im betreffenden Signal, hier dem Signal DSC(T) auftreten. Diese sich in der Messkurve DSCsample zeigenden Effekte basieren auf Phasenübergängen oder anderen endothermen oder exothermen Vorgängen in der untersuchten Probe. Mittels eines auf der Rechnereinrichtung laufenden geeigneten Segmentierungsalgorithmus werden diese Effekte in der Messkurve DSCsample identifiziert und voneinander abgegrenzt. Dies kann in einfacher Weise z. B. unter Berücksichtigung von Schwellwerten der Messsignaländerungen und der Änderungen der Ableitung DSCsample(T)/dT des Messsignals DSCsample(T) geschehen.

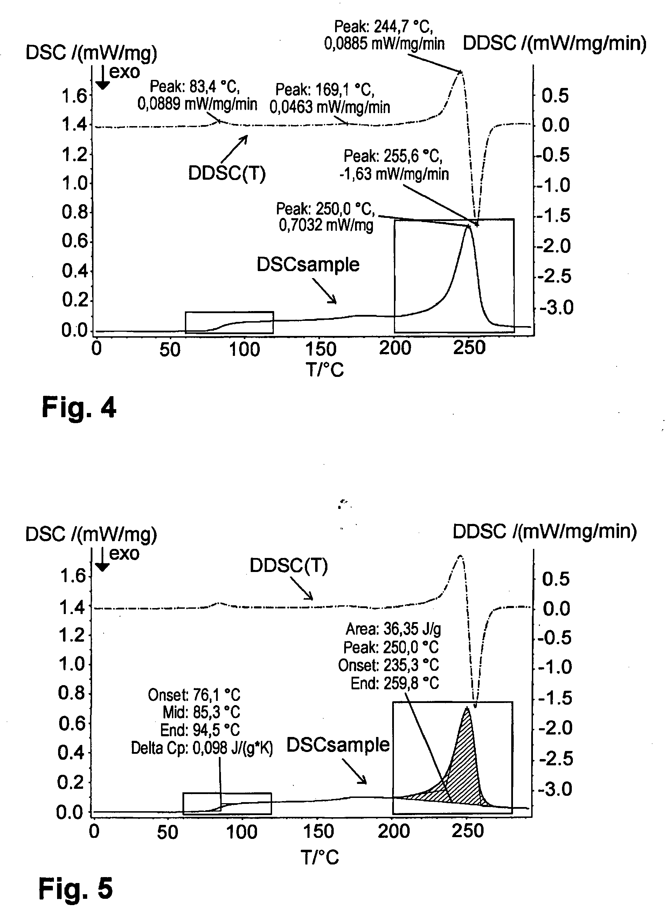

In Fig. 4 ist die Durchführung und das Ergebnis der Segmentierung (Schritt S2) der Messkurve DSCsample von Fig. 3 zwecks Identifizierung von darin enthaltenen Effekten veranschaulicht.

Im hier beschriebenen Beispiel (Fig. 4) wird z. B. ein (lokales) Maximum im Signal DSC(T) bei etwa 250°C detektiert. Maxima zeichnen sich auch dadurch aus, dass sich davor bzw. danach ein Maximum bzw. Minimum in der Ableitung DDSC(T) (= DSC(T)/dT; gestrichelte Linie in Fig. 4) befindet.

Im dargestellten Beispiel ergeben sich das Maximum und das Minimum der Ableitung DDSC(T) etwa bei T = 245°C (Maximum) bzw. T = 256°C (Minimum).

Der Temperaturbereich des gesamten Effekts, hier des Effekttyps "Maximum", also herrührend von einem endothermen Effekt in der Probe (z. B. aufgrund von Schmelzen) ist in Fig. 4 durch ein Rechteck hervorgehoben. Dieser Temperaturbereich (temperaturmäßige Ausdehnung des Effektes) kann z. B. anhand der Ableitung DDSC(T) festgelegt werden:

Als ein Beginn des Effektes könnte z. B. eine Temperatur festgelegt werden, bei welcher der Betrag (Absolutwert) der Ableitung DDSC(T) einen mittels des verwendeten Algorithmus vorbestimmten Schwellwert überschreitet.

Sodann (oder bevorzugt bei dem nachfolgend noch beschriebenen Schritt S3) kann durch den eingesetzten Algorithmus anhand des Maximums des Messignals DSC(T) eine Mittentemperatur ("Peak") des Effektes bestimmt werden.

Ein Ende des Effektes kann schließlich z. B. bei derjenigen Temperatur festgelegt werden, bei der der Betrag der Ableitung Ableitung DDSC(T) einen mittels des verwendeten Algorithmus vorbestimmten Schwellwert unterschreitet.

Im hier beschriebenen Beispiel (Fig. 4) wird außerdem etwa bei T = 83°C ein Effekt vom Typ "Stufe" detektiert. Bei dieser Art von Effekt tritt ein Maximum in der Ableitung DDSC(T) auf, so dass auch dies mittels des Segmentierungsalgorithmus in einfacher Weise detektierbar ist. Eine Stufe im DSC-Signal kann z. B. von einem so genannten Glasübergang im Material der Probe herrühren.

Der Temperaturbereich dieses Effekts kann wieder mittels eines Schwellwertes für die Ableitung DDSC(T) definiert werden.

Die Signifikanz bzw. Detektionsempfindlichkeit für die vorstehend erwähnen Effekttypen lässt sich z. B. dadurch definieren, dass die Absolutwerte der Maxima im Signal DSC(T) bzw. der Ableitung DDSC(T) bestimmte Schwellwerte übertreffen müssen. Beispielsweise ist das in der Messkurve DSCsample von Fig. 4 ebenfalls erkennbare Maximum in der Ableitung DDSC(T) etwa bei T = 169°C zu klein, um auf einen signifikanten Effekt schließen zu können. Der Segmentierungsalgorithmus identifiziert an dieser Stelle daher keinen Effekt.

Mit Bezug auf Fig. 1, erfolgt im Schritt S3 dann eine Auswertung der Effekte (Merkmalsextraktion), indem die in Schritt S2 gefundenen Effekte mit Hilfe der Auswertesoftware bzw. eines Extraktionsalgorithmus hinsichtlich ihrer Eigenschaften und Merkmale weiter ausgewertet werden.

In Schritt S3 kann z. B. insbesondere die Bestimmung einer weiteren Anfangstemperatur und einer weiteren Endtemperatur für jeden der Effekte oder zumindest die Effekte wenigstens eines bestimmten Effekttyps vorgenommen werden. Diese Bestimmung kann z. B. gemäß bekannter Normen wie z. B. DIN 51007 oder ASTM E 53765 durchgeführt werden, um eine üblicherweise als "Onset" bezeichnete (weitere) Anfangstemperatur und/oder eine üblicherweise als "End" bezeichnete (weitere) Endtemperatur zu bestimmen. Diese Temperaturwerte können dann als entsprechende Vektorkomponenten in den jeweiligen Merkmalsvektor eingehen. Deren Berechnung kann insbesondere auf der Anwendung eines Tangentenverfahrens beruhen (vgl. z. B. die in den genannten Normen hierfür vorgesehenen Verfahren).

Ferner können in Schritt S3 die bereits erwähnten Auswertungen hinsichtlich einer Mittentemperatur ("Peak") und/oder (zumindest für Maxima und Minima) eines oder mehrerer Kurvenintegrale vorgesehen sein. Für die Berechnung eines Kurvenintegrals (z. B. Fläche unter einem Maximum oder Minimum) können z. B. eine der erwähnten Anfangstemperaturen und eine der erwähnten Endtemperaturen als Bereichsgrenzen für die Integration verwendet werden.

Die Schritte S2 und S3 können halbautomatisch, d.h. softwareunterstützt, oder vollautomatisch, d.h. komplett mittels Software, ablaufen. Die Effektmerkmale, welche allgemein die Position, die Größe und die Form der zuvor identifizierten Effekte betreffen, werden für jeden vorliegenden Effekt jeweils in einem Merkmalsvektor abgelegt.

Fig. 5 ist eine Darstellung entsprechend Fig. 4, wobei jedoch zur Erläuterung der Extraktion von Merkmalen (Schritt S3) die in diesem Beispiel quantifizierten Eigenschaften der in der Messkurve DSCsample identifizierten Effekte angegeben sind.

Im Beispiel gemäß Fig. 5 wurde die Auswertung der Effekte nach bekannten Normen wie DIN 51007 oder ASTM E 53765 durchgeführt.

Die Merkmale für den Glasübergang etwa bei T = 85°C sind hier die extrapolierten Größen "Onset" (Anfangstemperatur), "Mid" (Mittelpunkttemperatur), "End" (Endtemperatur), "Delta Cp" (Stufenhöhe).

Für den "endothermen Peak" (Maximum) etwa bei T = 250°C wurden ebenfalls die Eigenschaften "Onset" und "End", sowie die Eigenschaften "Peak" (Temperatur des Maximums) und "Area" (Fläche) ausgewertet.

Die in Fig. 5 für diese Eigenschaften angegebenen Zahlenwerte sind die "Merkmale" des jeweiligen Effektes und bilden als "Effektdaten" Komponenten eines vom Extraktionsalgorithmus für jeden Effekt als Ergebnis des Schrittes S3 bereitgestellten "Merkmalsvektors".

Mit Bezug auf Fig. 1, erfolgt im Schritt S4 dann ein Vergleich der Effekte, die in der Messkurve DSCsample aufgefunden (Schritt S2) und näher quantifiziert (Schritt S3) wurden, mit Effekten, die für "gespeicherte Messergebnisse" in Form von Datensätzen in einer Datenbank der verwendeten Rechnereinrichtung vorab gespeichert wurden.

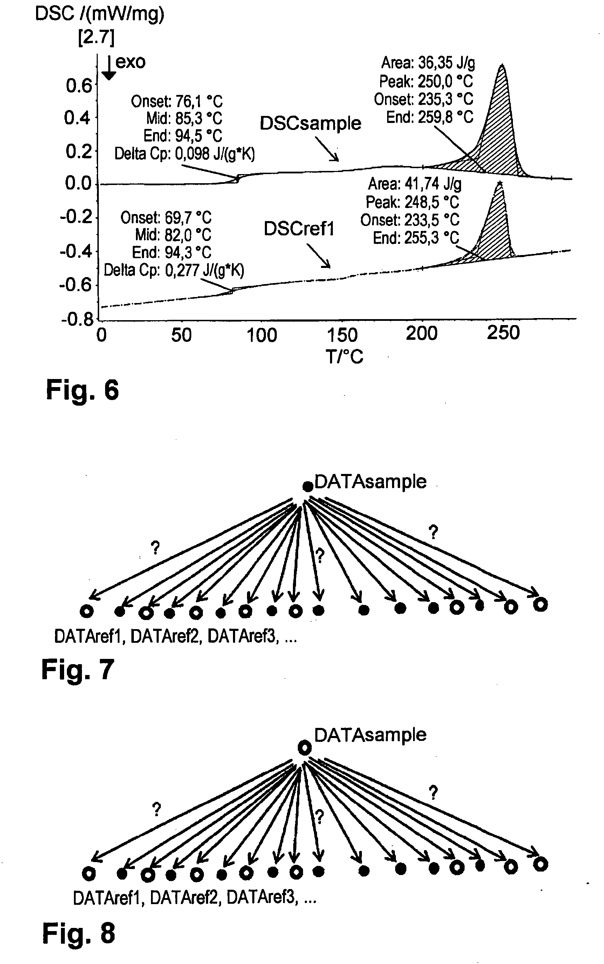

Fig. 6 veranschaulicht die Durchführung eines solchen Vergleiches zwischen den aus der Messkurve DSCsample extrahierten Effektdaten mit entsprechenden vorab in der Rechnereinrichtung gespeicherten Effektdaten einer echten (zuvor gemessenen) oder fiktiven (z. B. aus Literaturwerten für Effekte modellierten) Messkurve DSCref1.

Die in Fig. 6 gestrichelte Messkurve DSCref1 ist dabei eine vorhandene, bekannte Kurve aus einer Datenbank, in der eine Vielzahl solcher bekannter Kurven DSCref1, DSCref2, DSCref3, ... gespeichert sind.

Die vorstehende Aufzählung "DSCref1, DSCref2, DSCref3, ..." soll zum Ausdruck bringen, dass eine Vielzahl derartiger Kurven in der Rechnereinrichtung vorab gespeichert sein können, beispielsweise mehr als 20 oder mehr als 100. Diesbezüglich ist wieder anzumerken, dass die Anzahl derartiger vorab gespeicherter bekannter Kurven bzw. genauer gesagt der solchen Kurven entsprechenden Effektdaten auch betriebsmäßig variierbar vorgesehen sein kann.

Der Schritt S4 liefert als Ergebnis ein Maß für die Ähnlichkeit bzw. Übereinstimmungswahrscheinlichkeit von Effekten und letztlich der betrachteten Messkurven (hier unbekannte Messkurve DSCsample vs. Messkurve DSCref1 aus der Datenbank der Rechnereinrichtung). Die Größen Ähnlichkeit bzw. Übereinstimmungswahrscheinlichkeit zwischen Messkurven sind komplementär zum Unterschied bzw. der Differenz zwischen den Messkurven.

Zur Berechnung werden die in Schritt S3 erzeugten (berechneten) Merkmalsvektoren als Eingangsgrößen für einen Vergleichsalgorithmus der Auswertesoftware verwendet. Der Vergleichsalgorithmus kann z. B. gemäß eines numerischen bzw. analytischen Algorithmus, oder auch gemäß eines statistischen Algorithmus arbeiten. Dabei lässt sich eine Übereinstimmungswahrscheinlichkeit p beispielsweise wie folgt ausdrücken:

$$p = fp(Position) \times fg(Größe) \times ff(Form),$$

wobei fp, fg, und ff Übereinstimmungswahrscheinlichkeiten im Hinblick auf Position, Größe und Form der Effekte darstellen, und wobei zur Berechnung von fp, fg, und ff die entsprechenden in Schritt S4 bestimmten Effektmerkmale aus der Messkurve DSCsample sowie die für die Referenzkurve DSCref1 gepeicherten Effektdaten verwendet werden.

Dadurch lassen sich ähnliche Kurven durch hohe Übereinstimmungswahrscheinlichkeit finden, wie in Fig. 6 illustriert. Die in Fig. 6 beispielhaft eingezeichnete Referenz-Messkurve DSCref1 besitzt eine hohe Übereinstimmungswahrscheinlichkeit mit der unbekannten Kurve DSCsample.

Durch derartige Vergleiche der Messkurve DSCsample mit jeder der vorab gespeicherten Referenz-Messkurven DSCref1, DSCref2, DSCref3, ... kann die unbekannte Kurve DSCsample bzw. die zugrundeliegende Probe also identifiziert und/oder charakterisiert und/oder klassifiziert werden.

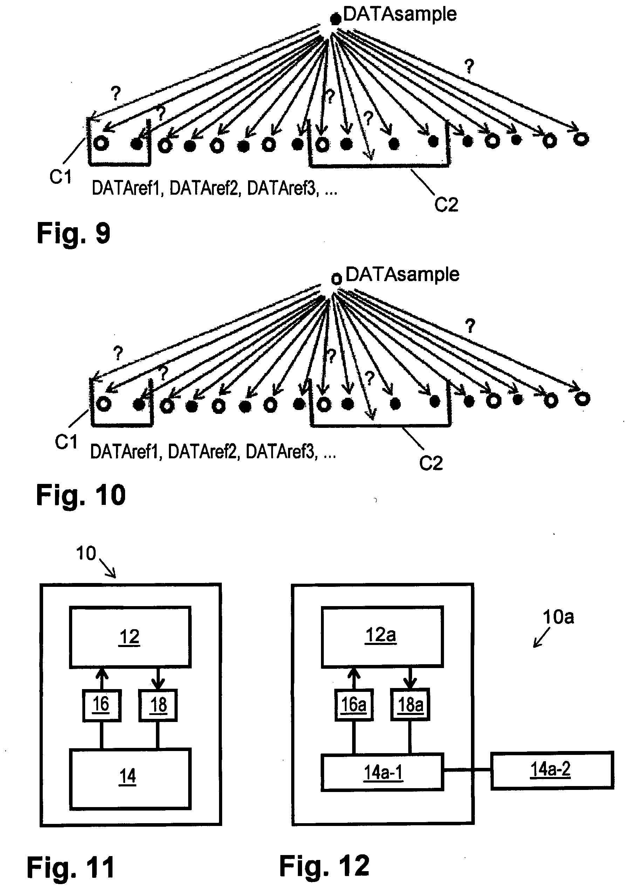

Hinsichtlich der Möglichkeit einer "Klassifizierung" der zugrunde liegenden Probe, also einer Zuordnung des betreffenden Messergebnisses zu einer von einer oder mehreren vorab definierten Klassen (z. B. Qualitätsklassen, Materialklassen etc.) wird auf die weiter oben bereits gegebenen Erläuterungen (sowie auf die noch folgende Erläuterung mit Bezug auf die Fig. 9 und 10) verwiesen.

Ist beispielsweise bekannt, dass die ähnliche Messkurve DSCref1 aus der Datenbank eine Messung an einem bestimmten Polymer "X" ist, wird auch die unbekannte Messkurve DSCsample mit hoher Wahrscheinlichkeit an dem Polymer X gemessen worden sein. Die unbekannte Probensubstanz ist also mit hoher Wahrscheinlichkeit das Polymer X.

Im dargestellten Beispiel ist schließlich noch ein Schritt S5 vorgesehen, in dem eine weiterführende Interpretation des Ergebnisses aus Schritt S4 vorgenommen wird.

Hierbei können aus den nach Durchführung der Schritte S1 bis S4 ermittelten Effekten, deren Merkmalen und den berechneten Übereinstimmungswahrscheinlichkeiten (Ähnlichkeiten bzw. Unterschiede) weitere Interpretationen abgeleitet werden. Qualitative und auch quantitative Unterschiede zu den gespeicherten Kurven im Vergleich zu den Kurven DSCref1, DSCref2, DSCref3, ..., die auch zur Berechnung neuer Größen dienen können, können als Entscheidungskriterien zur Beurteilung einer unbekannten Messkurve wie z. B. der dargestellten Kurve DSCsample herangezogen werden.

Wenn das beschriebene Auswerteverfahren z. B. als Messverfahren im Bereich der Qualitätssicherung bei der Produktion von Gütern eingesetzt wird, so können aus den Ergebnissen des Schrittes S4, und gegebenenfalls S5, wiederum Entscheidungen für den Prozess der Qualitätssicherung bzw. die Produktion der Güter abgeleitet werden (vgl. hierzu auch weiter unten gegebene Erläuterung).

In dem Beispiel gemäß Fig. 5 wurde mittels der Auswertesoftware beispielsweise eine Fläche des endothermen "Schmelzpeaks" von etwa 36 J/g berechnet. Dieser Wert entspricht der Schmelzenthalpie der Probe. Aus der Literatur oder von einer Datenbankkurve lässt sich erkennen, dass das identifizierte Polymer "X" bei voller Kristallinität eine maximale Schmelzenthalpie von 100 J/g hat. Demnach kann, etwa mittels der weitergehenden Interpretation gemäß Schritt S5, der Kristallinitätsgrad der unbekannten Probe zu 36 J/g : 100 J/g = 0,36 = 36 % berechnet werden.

Weiterhin lassen sich im Rahmen der Erfindung neue Messkurven den Datenbanken der bekannten Messkurven hinzufügen. Hierfür sind keine Kenntnisse über die Messkurve sondern lediglich ein Bezeichner oder Name für die Messkurve erforderlich.

In einer Ausführungsform wird das vorstehend beschriebene Auswerteverfahren zumindest mit den Schritten S1 bis S4 in einem System durchgeführt, welches sowohl eine Vorrichtung zur Durchführung einer thermischen Analyse als auch eine Rechnereinrichtung umfasst, die zur Auswertung eines Messergebnisses der thermischen Analyse ausgebildet ist. Dieselbe oder eine weitere programmgesteuerte Rechnereinrichtung kann hierbei zur Steuerung des Betriebs der Vorrichtung zur Durchführung der thermischen Analyse eingesetzt werden.

Nachfolgend werden mit Bezug auf die Fig. 7 bis 10 nochmals verschiedene Varianten eines Vergleiches zwischen einem unbekannten Messergebnis mit einer Mehrzahl von in einer Datenbank gespeicherten bekannten Messergebnissen erläutert.

Das beschriebene effekt- und merkmalsbasierte Auswerteverfahren (vgl. z. B. Ausführungsbeispiel gemäß der Fig. 1 bis 6) benötigt als Eingangsgrößen nicht unbedingt Messkurven im ursprünglichen Sinn, d. h. Rohsignale, wie sie unmittelbar aus einer thermischen Analyse resultieren. Vielmehr genügen als Eingangsgrößen die aus einer Messkurve der thermischen Analyse extrahierten Effektdaten, wobei unter den Begriff "Effektdaten" hierbei sowohl aus einem echten (gemessenen) Messergebnis extrahierte Daten als auch z. B. lediglich auf Literaturwerten von Effekten basierende Daten fallen. In letzterem Fall kann man auch von Effektdaten sprechen, die vorab aus einer "virtuellen Messkurve" extrahiert wurden.

In den Fig. 7 bis 10 sind die auf einer "echten" Messung beruhenden Effektdaten jeweils durch ein "Punkt" symbolisiert, und die tatsächlich in anderweitiger Weise (z. B. aus Literaturdaten bzw. einer "virtuellen Messkurve" generierten) Effektdaten jeweils durch ein "Kreis" symbolisiert.

Fig. 7 veranschaulicht die Durchführung des Auswerteschrittes "Vergleich der Effektdaten", wobei dem verwendeten Vergleichsalgorithmus (vgl. z. B. Schritt S4 im obigen Ausführungsbeispiel) Effektdaten DATAsample eingegeben werden, die aus einer Messkurve im ursprünglichen Sinn (z. B. die Kurve DSCsample' in Fig. 2 oder Kurve DSCsample in Fig. 3) extrahiert wurden.

Diese unbekannten Effektdaten DATAsample werden sodann mit als Datensätzen vorab in der Rechnereinrichtung gespeicherten Effektdaten DATAref1, DATAref2, DATAref3, ... verglichen. Die Pfeile und exemplarisch eingezeichneten Fragezeichen ("?") in Fig. 7 sollen den Vergleich bzw. die Berechnung der Übereinstimmungswahrscheinlichkeiten symbolisieren.

Wie in Fig. 7 symbolisiert, können in der Datenbank sowohl auf einer Messung beruhende Effektdaten (durch "Punkte" symbolisiert) als auch in anderweitiger Weise generierte Effektdaten (durch "Kreise" symbolisiert) enthalten sein.

Demnach können auch Merkmale allein (d.h. ohne eigentliche Messkurve) als unbekannte "virtuelle Messkurven" in der Datenbank gespeichert sein und als Referenz-Eingangsgrößen des Verfahrens eingesetzt werden. Dies bedeutet wiederum, dass das Verfahren auch als Datenbanksuchverfahren ohne unbekannte Messung im ursprünglichen Sinn verwendet werden kann. Dies veranschaulicht Fig. 8.

Fig. 8 zeigt die Durchführung des Auswerteschrittes "Vergleich der Effektdaten", wobei dem verwendeten Vergleichsalgorithmus Effektdaten DATAsample eingegeben werden, die auf einer "virtuellen Messkurve" basieren.

Wie bereits erwähnt umfasst das bei der Erfindung eingesetzte Auswerteverfahren ferner den Schritt einer Zuordnung des Messergebnisses (hier: Effektdaten DATAsample) zu einer von mehreren vorab definierten Klassen der Datensätze (DATAref1, DATAref2, DATAref3, ...). Eine solche Zuordnung wird bei der Erfindung auf Basis des Ergebnisses der Berechnung der Übereinstimmungswahrscheinlichkeiten realisiert. Dies veranschaulichen die Fig. 9 und 10.

Fig. 9 zeigt die Durchführung des Auswerteschrittes "Vergleich der Effektdaten" ähnlich wie bei Fig. 7, wobei jedoch ein Teil der gespeicherten Datensätze DATAref1, DATAref2, DATAref3, ... in einer jeweligen Klasse zusammengefasst sind. Im dargestellten Beispiel sind dies zwei Klassen C1 und C2. Hierzu ist anzumerken, dass Datensätze gleichzeitig mehreren Klassen angehören können, z. B. einer Materialklasse und gleichzeitig einer Qualitätsklasse.

Fig. 10 zeigt ähnlich wie Fig. 9 einen Vergleich der Effektdaten DATAsample mit vorab gespeicherten Datensätzen DATAref1, DATAref2, DATAref3, die wieder teilweise als Klassen C1 und C2 zugehörig definiert sind, wobei im Unterschied zu der Ausführung nach Fig. 9 die Effektdaten DATAsample auf einer "virtuellen Messkurve" bzw. Literaturwerten von Effektdaten für eine bekannte Probe basieren.

Die erwähnten Klassen (hier z. B. die Klassen C1 und C2) der gespeicherten Messkurven sind in diesem Verfahren Gruppen einer Klasse (z. B. "Substanzklasse" der Probe) angehöriger Messkurven. Der Anwender kann vorhandene Messkurven (wie DATAref1, DATAref2, DATAref3, ...) durch entsprechene Benutzereingaben selbst gruppieren und erhält durch das Verfahren für eine neue Messkurve (wie DSCsample bzw. DATAsample) die jeweiligen Zugehörigkeitswahrscheinlichkeiten für verschiedene vorhandene Klassen.

Durch das Gruppieren durch den Anwender kann das Verfahren bei geeigneter Ausgestaltung der Software bezüglich der Klassifikation immer mehr trainiert werden, ohne dass die mathematischen Grundparameter des Verfahrens modifiziert werden müssen. Dies hat den Vorteil, dass die Berechnung der Übereinstimmungswahrscheinlichkeit zwischen verschiedenen Messkurven unabhängig von der Gruppierung der Messkurven durch den Anwender bleiben kann und damit der Algorithmus des Verfahrens robust ist.

Fig. 11 veranschaulicht ein System 10 zur Durchführung einer thermischen Analyse und gleichzeitigen oder unmittelbar nachfolgenden Auswertung von damit gewonnenen Messergebnissen.

Das System 10 umfasst eine Vorrichtung 12 zur Durchführung einer thermischen Analyse, die in an sich bekannter Art ausgebildet sein kann, also z. B. umfassend einen steuerbar temperierbaren Ofen zum Temperieren einer Probe und Sensorik zur Erfassung von Betriebsparametern (z. B. Ofentemperatur) und des oder der aufzuzeichnenden Messsignale (z. B. DSC-Signal, Probenmassesignal, Probenlängensignal etc.).

Ferner umfasst das System 10 im dargestellten Beispiel eine Rechnereinheit 14, welche in an sich bekannter Weise den Betrieb (z. B. Ablauf eines bestimmten Temperierungsprogramms) der thermische Analyse-Vorrichtung 12 steuert und das oder die gewünschten Messignale (insbesondere z. B. ein DSC-Signal) aufzeichnet.

Zu diesem Zweck ist die Rechnereinheit 14 über eine Ansteuerschnittstelle 16 und eine Sensorikschnittstelle 18 mit der thermische Analyse-Vorrichtung 12 verbunden. Über die (z. B. digitale) Ansteuerschnittstelle 16 kann z. B. insbesondere die Ansteuerung einer in der Vorrichtung 12 enthaltenen Ofenheizeinrichtung erfolgen, wohingegen über die (z. B. digitale) Sensorikschnittstelle 18 das oder die mittels der betreffenden Sensorikeinrichtung(en) gewonnenen Messignale (vgl. z. B. DSCsample' in Fig. 2) an die Rechnereinheit 14 geliefert werden.

Darüber hinaus ist mittels der Rechnereinrichtung 14 bzw. der darauf ablaufenden Software zusätzlich ein Auswertverfahren der bereits beschriebenen Art implementiert, so dass mittels des Systems 10 vorteilhaft zugleich eine Auswertung eines mittels der thermische Analyse-Vorrichtung 12 erhaltenen Messergebnisses der thermischen Analyse durchgeführt werden kann.

Mithin eignet sich das System 10 z. B. insbesondere als ein Messsystem, welches in einer Qualitätssicherung (einschließlich "Prozesskontrolle") bei einem Produktionsprozess (einschließlich "Verarbeitungsprozess" im engeren Sinne) eingesetzt wird.

Effekte, deren Merkmale oder Ähnlichkeiten zwischen Effekten oder ganzen Messkurven, wie sie durch die rasch durchzuführende Auswertung erhältlich werden, können als Qualitätskriterien dienen. Dadurch lassen sich mittels des Systems 10 untersuchte Proben z. B. in verschiedene Qualitätsklassen, z. B. in Klassen "Gutteile" und "Schlechtteile" einteilen.

Dies kann z. B. durch das mit Bezug auf die Fig. 9 und 10 geschilderte Klassifikationsverfahren geschehen, sei es z. B. vor dem eigentlichen Prozess (z. B. Wareneingangskontrolle) oder nach dem eigentlichen Prozess (z. B. Ausgangskontrolle an Fertigteilen oder Stichproben davon).

Beispielsweise können (im Vergleich zu bekannten Effektdaten) zusätzlich detektierte Effekte in der Messkurve Verunreinigungen der Probe anzeigen. Zusätzliche Effekte können außerdem Auskunft über die thermische Vorgeschichte bzw. thermische Vorbehandlung eines Materials geben, d.h. wie das Eingangsmaterial bei der Lagerung oder Herstellung temperaturbehandelt wurde. Es lässt sich weiterhin, wie weiter oben bereits erwähnt, beispielsweise ein Kristallinitätsgrad oder das Potential zur Nachkristallisation (bzw. auch zur Nachvernetzung oder Nachhärtung) aus der Größe eines Effekts (des "Kristallisationspeaks" bzw. eines "Vernetzungspeaks") berechnen, der mit mechanischen Werten (Härte, Steifigkeit) der Probe korreliert, einer oftmals wichtigen Eigenschaft des Fertigteils.

Aufgrund der hohen Geschwindigkeit des Auswerteverfahrens kann eine weiterführende Interpretation der Kurvenerkennung (vgl. z. B. Schritt S5 bei dem weiter oben beschriebenen Ausführungsbeispiel) auch vorteilhaft in-situ bzw. online im Prozess angewandt werden:

So kann z. B. eine laufende Messung aufgrund eines bestimmten Ergebnisses der weiterführenden Interpretation der Kurvenerkennung vorzeitig abgebrochen werden, um Zeit zu sparen.

Die bereits erwähnten "Schlechtteile" eines Produktionsprozesses können z. B. online (durch die betreffende Rechnereinrichtung gesteuert) ausgeschleust werden.

Ein ganzer Produktionsprozess, d. h. hierfür eingesetzte Maschinen, könnten gestoppt werden oder die Einstellungen der Maschinen online geändert werden - basierend auf den Ergebnissen der Auswertung, insbesondere z. B. der weiterführenden Interpretation des Effektdatenvergleichsergebnisses.

Beispielsweise kann eine einzustellende Werkzeugtemperatur ein wichtiger Einflussparameter auf den erwähnten Kristallinitätsgrad der Proben bzw. der Fertigteile sein. D.h. die Werkzeugtemperatur kann vor, während und/oder nach der Durchführung des Prozesses angepasst werden. Weiterhin könnte auf Basis des Auswertungsergebnisses z. B. eine Maschine zum Öffnen und Entnehmen eines Fertigteils getriggert werden. Dadurch lassen sich Zykluszeiten im Prozess reduzieren und die Produktivität erhöhen. Schließlich könnten unter Einsatz der Erfindung auch für die Produktion notwendige Rohmaterialien in ihrer Menge dosiert werden, d.h. die Mengenverhältnisse angepasst werden.

Fig. 12 zeigt ein System 10a ähnlich demjenigen von Fig. 11, jedoch in einer abgewandelten Ausführung.

Das System 10a gemäß Fig. 12 besitzt im wesentlichen den gleichen Aufbau und die gleiche Funktion wie das bereits beschriebene System 10 gemäß Fig. 11. Bei dem Ausführungsbeispiel gemäß Fig. 12 sind für gleichwirkende Komponenten die gleichen Bezugszahlen verwendet, jeweils ergänzt durch einen kleinen Buchstaben "a" zur Unterscheidung der Ausführungsform.

Die Modifikation des Systems 10a besteht darin, dass es anstatt einer gemeinsam für die thermische Analyse-Steuerung und die Analyse-Auswertung genutzten Rechnereinrichtung zwei separat implementierte Rechnereinrichtungen 14a-1 und 14a-2 umfasst.

Die erste Rechnereinrichtung 14a-1 dient in an sich bekannter Weise dazu, den Betrieb (z. B. Ablauf eines bestimmten Temperierungsprogramms) der thermische Analyse-Vorrichtung 12a zu steuern und das oder die gewünschten Messignale aufzuzeichnen. Die Rechnereinrichtung 14a-1 ist baulich mit der Vorrichtung 12a zusammengefasst (hier: zusammen mit der Vorrichtung 12a in einem gemeinsamen Gerätegehäuse untergebracht).

Demgegenüber dient die zweite, separat davon ausgebildete, jedoch in Kommunikationsverbindung mit der ersten Rechnereinrichtung 14a-1 stehende Rechnereinrichtung 14a-2 dazu, das Auswerteverfahren der beschriebenen Art durchzuführen, so dass mittels des Systems 10a vorteilhaft zugleich eine Auswertung eines mittels der thermische Analyse-Vorrichtung 12a erhaltenen Messergebnisses durchgeführt werden kann.

Im dargestellten Beispiel gemäß Fig. 12 ist die Kommunikationsverbindung zwischen den Rechnereinrichtungen 14a-1 und 14a-2 durch eine geeignete Verkabelung realisiert, z. B. durch eine Verkabelung gemäß eines Rechnernetzwerk-Standards.

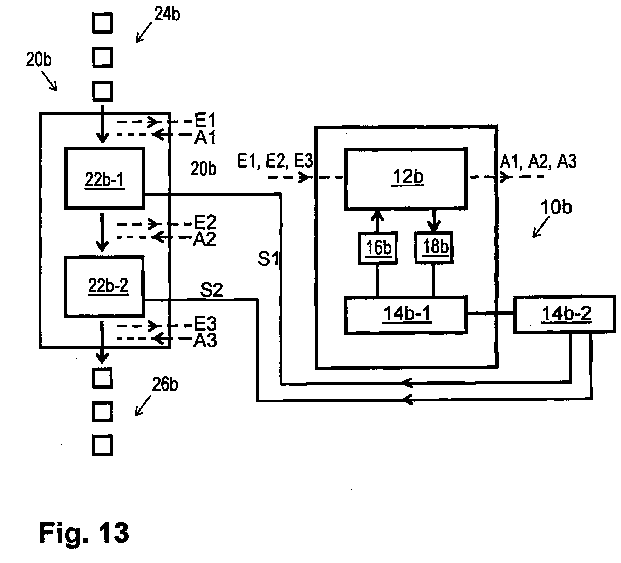

Fig. 13 veranschaulicht eine erfindungsgemäße Verwendung eines Systems 10b der mit Bezug auf Fig. 12 bereits beschriebenen Art für die Qualitätssicherung in einem industriellen Prozess. Das System 10b umfasst demnach eine thermische Analyse-Vorrichtung 12b, eine Rechneranordnung mit kommunizierenden Rechnereinheiten 14b-1 und 14b-2, eine Sensorikschnittstelle 18b, und eine Ansteuerschnittstelle 16b.

Bei der Systemverwendung bzw. Qualitätssicherung gemäß Fig. 13 ist eine (z. B. industrielle) Produktions- oder Verarbeitungsanlage 20b vorgesehen, welcher "Rohprodukte" bzw. Ausgangsmaterialien 24b zugeführt werden und welche daraus "Endprodukte" 26b erzeugt.

Zu diesem Zweck umfasst die Anlage 20b im dargestellten Beispiel zwei Verarbeitungsstationen (Maschinen) 22b-1 und 22b-2. Diese nacheinander durchlaufenen Stationen 22b-1, 22b-2 bilden somit einen Erzeugungs- bzw. Verarbeitungspfad zur Fertigstellung der Endprodukte 26b.

Zur Realisierung der Qualitätssicherung werden im dargestellten Beispiel an drei Stellen zumindest stichprobenartig Produkte aus ihrer Förderung entlang des Erzeugungs- bzw. Verarbeitungspfades herausgenommen (vgl. gestrichelte Pfeile bei E1, E2 und E3), durch die thermische Analyse-Vorrichtung 12b einer thermischen Analyse unterzogen, und an jeweils gleicher Stelle wieder in den Verarbeitungspfad eingeschleust (A1, A2 bzw. A3).

Wie bereits für das vorangegangene Beispiel von Fig. 12 beschrieben, wird mittels der Rechnereinheit 14b-2 eine Auswertung der jeweiligen Messergebnisse durchgeführt.

Abhängig von den Ergebnissen dieser Auswertungen erfolgt bedarfsweise und in automatischer Weise (durch die Rechnereinrichtung 14b-2 initiiert) ein Eingriff in den Erzeugungs- bzw. Verarbeitungsprozess. Zu diesem Zweck sind die in Fig. 13 mit S1 und S2 dargestellten Kommunikations- bzw. Wirkverbindungen vorgesehen, welche es erlauben, Steuersignale zur Veränderung der Betriebsweise (z. B. Anpassung von Betriebsparametern) der im Prozess eingesetzten Stationen 22b-1 und 22b-2 zu übertragen. Alternativ oder zusätzlich kann in einem solchen Fall z. B. auch eine Alarmierung von Bedienpersonal erfolgen.

Zusammenfassend stellt die Erfindung insbesondere eine vorteilhafte Verwendung eines Verfahrens zur automatischen Erkennung und Klassifizierung von Messkurven im Bereich der Thermischen Analyse mit Anwendung des Verfahrens in Prozessen, z. B. industriellen Prozessen der Qualitätssicherung bzw. der Produktion bereit.

**Patentansprüche**

1. Verwendung eines Verfahrens zur Auswertung eines Messergebnisses (DSCsample; DATAsample) einer thermischen Analyse zur Qualitätssicherung bei der Produktion oder Verarbeitung von Gütern (24b, 26b), wobei die Verwendung folgende Schritte umfasst:

   - zumindest stichprobenweise Durchführung einer thermischen Analyse an produzierten bzw. verarbeiteten Gütern (24b, 26b),
   - Auswertung der Messergebnisse (DSCsample; DATAsample) der thermischen Analyse mittels des Verfahrens,

   **dadurch gekennzeichnet, dass** bei dem Verfahren in einem System (10; 10a) umfassend eine Vorrichtung (12; 12a) zur Durchführung der thermischen Analyse unter Verwendung einer programmgesteuerten Rechnereinrichtung (14; 14a-2) eine Vielzahl von quantitativen Wahrscheinlichkeiten der Übereinstimmung des Messergebnisses (DSCsample; DATAsample) mit einer Vielzahl von vorab in der Rechnereinrichtung (14; 14a-2) gespeicherten Datensätzen berechnet wird,
   wobei diese Berechnungen der quantitativen Wahrscheinlichkeiten jeweils auf einem Vergleich (S4) von zuvor aus einer Messkurve (DSCsample) der thermischen Analyse extrahierten Effektdaten (DATAsample) mit entsprechenden gespeicherten Effektdaten (DATAref1) des Datensatzes basieren,
   wobei die Effektdaten (DATAsample, DATAref1) zumindest Minima, Maxima und Stufen des Messkurvenverlaufes (DSCsample), und optional ferner Maxima, Minima und Stufen im Verlauf der Ableitung des Messkurvenverlaufs (DSCsample), als Effekttypen berücksichtigen,
   wobei ein bei den Berechnungen verwendeter Vergleichsalgorithmus so gestaltet ist, dass unterschiedlichen Effekttypen und/oder deren Effektmerkmalen unterschiedliche mathematische Gewichte und damit unterschiedlich starke Bedeutungen zugewiesen werden können,
   und wobei die Messergebnisse (DSCsample; DATAsample) jeweils zu einer von mehreren vorab definierten Qualitätsklassen (C1, C2) unter Verwendung der Rechnereinrichtung (14; 14a-2) zugeordnet werden, wobei diese Zuordnung auf dem Ergebnis der Berechnung der Vielzahl von quantitativen Wahrscheinlichkeiten der Übereinstimmung basiert.

2. Verwendung nach Anspruch 1, wobei die Berechnungen der quantitativen Wahrscheinlichkeiten in Echtzeit, also im Wesentlichen noch während die betreffende thermische Analyse läuft, durchgeführt werden.

3. Verwendung nach einem der vorangehenden Ansprüche, wobei die Effektdaten (DATAsample, DATAref1) für jeden Effekt als ein jeweiliger Merkmalsvektor dargestellt sind, von welchem Vektorkomponenten bestimmte Eigenschaften des betreffenden Effektes quantitativ repräsentieren.

4. Verwendung nach einem der vorangehenden Ansprüche, wobei das Verfahren ferner den Schritt einer Extraktion (S2, S3) der Effektdaten (DATAsample) aus der Messkurve (DSCsample) der thermischen Analyse unter Verwendung der Rechnereinrichtung (14; 14a-2) umfasst.

5. Verwendung nach Anspruch 4, wobei das Verfahren ferner den Schritt einer Vorverarbeitung (S1) der Messkurve (DSCsample) unter Verwendung der Rechnereinrichtung (14; 14a-2), bevor die Extraktion (S2, S3) der Effektdaten (DATAsample) erfolgt, umfasst.

6. Verwendung nach einem der vorangehenden Ansprüche, wobei bei dem Verfahren eine weitergehende Interpretation (S5) des jeweiligen Messergebnisses (DSCsample; DATAsample) erfolgt.

7. Verwendung nach einem der vorangehenden Ansprüche, wobei abhängig vom Ergebnis der Auswertung in automatischer Weise, durch die Rechnereinrichtung (14; 14a-2) initiiert, in den betreffenden Prozess der Produktion bzw. Verarbeitung eingegriffen wird.

8. Verwendung nach Anspruch 7, wobei der Eingriff in den Prozess eine gesteuerte Veränderung der Betriebsweise, beispielsweise Betriebsparameterveränderung, wenigstens einer im Prozess eingesetzten Maschine und/oder ein Ausschleusen bestimmter produzierter bzw. verarbeiteter Güter als Ausschuss aus dem Prozess darstellt.

9. Computerprogrammprodukt, das computerlesbare Anweisungen enthält, das wenn es auf einem geeigneten System (10; 10a) ausgeführt wird, eine Verwendung nach einem der Ansprüche 1 bis 8 realisiert, insbesondere ferner enthaltend Anweisungen zur automatisierten Durchführung einer thermischen Analyse mittels des Systems (10; 10a).

10. Kombination, umfassend

   - eine Produktions- oder Verarbeitungsanlage (20b) zur Produktion oder Verarbeitung von Gütern (24b, 26b), und
   - ein System (10; 10a; 10b) umfassend eine Vorrichtung (12; 12a; 12b) zur Durchführung einer thermischen Analyse, und eine Rechnereinrichtung (14; 14a-2; 14b-2), die zur Auswertung eines Messergebnisses (DSCsample; DATAsample) der thermischen Analyse ausgebildet und integriert in oder verbunden mit der Vorrichtung (12; 12a; 12b) zur Durchführung einer thermischen Analyse ist,

   und ausgebildet zur Realisierung einer Verwendung nach einem der Ansprüche 1 bis 8.

**Claims**

1. Use of a method for evaluating a measurement result (DSCsample; DATAsample) of a thermal analysis for quality assurance in the production or processing of goods (24b, 26b), wherein the use comprises the following steps:

   - performance of a thermal analysis at least on a random sample basis on produced and/or processed goods (24b, 26b),
   - evaluation of the measurement results (DSCsample; DATAsample) of the thermal analysis by means of the method,

   **characterised in that** in the method a multiplicity of quantitative probabilities of agreement of the measurement result (DSCsample; DATAsample) with a multiplicity of datasets previously stored in a computing device (14; 14a-2) is calculated in a system (10; 10a) comprising a device (12; 12a) for performing the thermal analysis using the program-controlled computing device (14; 14a-2), wherein these calculations of the quantitative probabilities are in each case based on a comparison (S4) of effect data (DATAsample) previously extracted from a measurement curve (DSCsample) of the thermal analysis with corresponding stored effect data (DATAref1) of the dataset, wherein the effect data (DSCsample, DATAref1) take account of at least minima, maxima and steps of the measurement curve course (DSCsample), and optionally also maxima, minima and steps in the course of the derivative of the measurement curve course (DSCsample), as effect types, wherein a comparison algorithm used in the calculations is constituted such that different mathematical weightings and therefore varying degrees of importance can be assigned to different effect types and/or their effect features,
and wherein the measurement results (DSCsample, DATAsample) are assigned in each case to one of a plurality of previously defined quality classes (C1, C2) using the computing device (14; 14a-2), wherein this assignment is based on the result of the calculation of the multiplicity of quantitative probabilities of agreement.

2. The use according to claim 1, wherein the calculations of the quantitative probabilities are carried out in real time, i.e. essentially still while the thermal analysis concerned is taking place.

3. The use according to any one of the preceding claims, wherein the effect data (DATAsample, DATAref1) for each effect are represented as a respective feature vector, vector components from which represent quantitatively specific properties of the effect concerned.

4. The use according to any one of the preceding claims, wherein the method further comprises the step of an extraction (S2, S3) of the effect data (DATAsample) from the measurement curve (DSCsample) of the thermal analysis using the computing device (14; 14a-2).

5. The use according to claim 4, wherein the method further comprises the step of preliminary processing (S1) of the measurement curve (DSCsample) using the computing device (14; 14a-2), before the extraction (S2, S3) of the effect data (DATAsample) takes place.

6. The use according to any one of the preceding claims, wherein a more detailed interpretation (S5) of the respective measurement result (DSCsample; DATAsample) takes place in the method.

7. The use according to any one of the preceding claims, wherein, depending on the result of the evaluation, intervention initiated by the computing device (14; 14a-2) takes place automatically in the respective process of production or processing.

8. The use according to claim 7, wherein the intervention into the process represents a controlled change in the operating mode, for example a change in the operating parameters, of at least one machine used in the process and/or an elimination of specific produced and/or processed goods as rejects from the process.

9. A computer program product, which contains computer-readable instructions and which, when executed on a suitable system (10; 10a), performs the use according to any one of claims 1 to 8, in particular also containing instructions for the automatic performance of a thermal analysis by means of the system (10; 10a).

10. A combination, comprising

   - a production or processing plant (20b) for producing or processing goods (24b, 26b) and
   - a system (10; 10a; 10b) comprising a device (12; 12a; 12b) for performing a thermal analysis, and a computing device (14; 14a-2; 14b-2), which is designed to evaluate a measurement result (DSCsample; DATAsample) of the thermal analysis and is integrated into or connected to the device (12; 12a; 12b) for performing a thermal analysis,

   and constituted for performing the use according to any one of claims 1 to 8.

## Revendications

1. Utilisation d'un procédé pour l'évaluation d'un résultat de mesure (DSCsample ; DATAsample) d'une analyse thermique pour l'assurance qualité pendant la production ou le traitement de biens (24b, 26b), l'utilisation comprenant les étapes suivantes :

   - l'exécution d'une analyse thermique au moins par échantillonnage sur des biens produits ou traités (24b, 26b),
   - l'évaluation des résultats de mesure (DSCsample ; DATAsample) de l'analyse thermique au moyen du procédé,

   **caractérisée en ce qu'**avec le procédé dans un système (10 ; 10a) comprenant un dispositif (12 ; 12a) pour l'exécution de l'analyse thermique, une pluralité de probabilités quantitatives de concordance du résultat de mesure (DSCsample ; DATAsample) avec une pluralité d'ensembles de données enregistrés préalablement dans un moyen de calcul commandé par programme (14 ; 14a-2) est calculée à l'aide du moyen de calcul (14 ; 14a-2),
   dans laquelle ces calculs des probabilités quantitatives sont respectivement basés sur une comparaison (S4) de données d'effet (DATAsample) extraites précédemment d'une courbe de mesure (DSCsample) de l'analyse thermique avec des données d'effet (DATAref1) enregistrées correspondantes de l'ensemble de données,
   dans laquelle les données d'effet (DATAsample, DATAref1) tiennent compte au moins de minima, de maxima et de niveaux du parcours de la courbe de mesure (DSCsample), et optionnellement également de maxima, de minima et de niveaux dans le parcours de la déviation du parcours de la courbe de mesure (DSCsample), en tant que types d'effets, dans laquelle un algorithme de comparaison utilisé dans les calculs est conçu de telle façon que différents poids mathématiques et donc des significations d'intensité différente peuvent être attribués à différents types d'effets et/ou aux caractéristiques d'effet de ceux-ci,

et dans laquelle les résultats de mesure (DSCsample ; DATAsample) sont affectés respectivement à l'aide du moyen de calcul (14 ; 14a-2) à l'une parmi plusieurs classes de qualité (C1, C2) préalablement définies, cette affectation étant basée sur le résultat du calcul de la pluralité de probabilités quantitatives de concordance.

**2.** Utilisation selon la revendication 1, dans laquelle les calculs des probabilités quantitatives sont effectués en temps réel, donc essentiellement encore pendant l'exécution de l'analyse thermique concernée.

**3.** Utilisation selon l'une des revendications précédentes, dans laquelle les données d'effet (DATAsample, DATAref1) pour chaque effet sont représentées sous la forme d'un vecteur de caractéristique correspondant, dont les composantes de vecteur représentent quantitativement des propriétés spécifiques de l'effet concerné.

**4.** Utilisation selon l'une des revendications précédentes, dans laquelle le procédé comprend en outre l'étape d'extraction (S2, S3) des données d'effet (DATAsample) à partir de la courbe de mesure (DSCsample) de l'analyse thermique à l'aide du moyen de calcul (14 ; 14a-2).

**5.** Utilisation selon la revendication 4, dans laquelle le procédé comprend en outre l'étape de prétraitement (S1) de la courbe de mesure (DSCsample) à l'aide du moyen de calcul (14 ; 14a-2), avant l'extraction (S2, S3) des données d'effet (DATAsample).

**6.** Utilisation selon l'une des revendications précédentes, dans laquelle le procédé comprend une interprétation plus approfondie (S5) du résultat de mesure (DSCsample ; DATAsample) respectif.

**7.** Utilisation selon l'une des revendications précédentes, dans laquelle une intervention initiée par le moyen de calcul (14 ; 14a-2) a lieu dans le processus de production ou le traitement concerné en fonction du résultat de l'évaluation de façon automatique.

**8.** Utilisation selon la revendication 7, dans laquelle l'intervention dans le processus représente une modification commandée du mode de fonctionnement, par exemple une modification des paramètres de fonctionnement, d'au moins une machine utilisée dans le processus et/ou une élimination de certains biens produits ou traités rejetés du processus.

**9.** Produit de programme informatique contenant des instructions lisibles par ordinateur, mettant en oeuvre une utilisation selon l'une des revendications 1 à 8 lorsqu'il est exécuté sur un système approprié (10 ; 10a), et contenant en particulier en outre des instructions pour l'exécution automatisée d'une analyse thermique à l'aide du système (10 ; 10a).

**10.** Combinaison comprenant :

- une installation de production ou de traitement (20b) pour la production ou le traitement de biens (24b, 26b), et
- un système (10 ; 10a ; 10b) comprenant un dispositif (12 ; 12a ; 12b) permettant d'exécuter une analyse thermique, et un moyen de calcul (14 ; 14a-2) conçu pour l'évaluation d'un résultat de mesure (DSCsample ; DATAsample) de l'analyse thermique et intégré dans le dispositif (12 ; 12a ; 12b) ou relié à celui-ci pour l'exécution d'une analyse thermique,

et conçue pour mettre en oeuvre une utilisation selon l'une des revendications 1 à 8.

**Fig. 1**

DSC /(mW/mg)

Fig. 2

DSC /(mW/mg)

Fig. 3

Fig. 4

Fig. 5

DSC /(mW/mg)
[2.7]

↓exo

Onset: 76,1 °C
Mid: 85,3 °C
End: 94,5 °C
Delta Cp: 0,098 J/(g*K)

Area: 36,35 J/g
Peak: 250,0 °C
Onset: 235,3 °C
End: 259,8 °C

DSCsample

Onset: 69,7 °C
Mid: 82,0 °C
End: 94,3 °C
Delta Cp: 0,277 J/(g*K)

Area: 41,74 J/g
Peak: 248,5 °C
Onset: 233,5 °C
End: 255,3 °C

DSCref1

T/°C

**Fig. 6**

DATAsample

? ? ?

DATAref1, DATAref2, DATAref3, ...

**Fig. 7**

DATAsample

? ? ?

DATAref1, DATAref2, DATAref3, ...

**Fig. 8**

**Fig. 9**

**Fig. 10**

**Fig. 11**          **Fig. 12**

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19825472 B4
- DE 102009038343 A1

- DE 102012105101 B3


**In der Beschreibung aufgeführte Nicht-Patentliteratur**

- **K. M. MCCUTCHEON et al.** Thermal analysis of selected commercial thermoplastic resins (U). *Defence Research Establishment Ottawa,* Juni 1991
- **O. JACOBS et al.** VDI-Tagung "Schadensanalyse. *Thermoanalyse an schadhaften Kunststoffbauteilen,* 19. Oktober 2011
- **N. RAI SHESH et al.** Group classification based on High-dimensional data: application to differential scanning calorimetry plasma thermogram analysis of cervical cancer and control samples. *Open Access Medical Statistics,* 17. April 2013

- Description of the shape of thermoanalytical curves. **GYÖRGY POKOL et al.** Analytica Chimica Acta. Elsevier, 1985, vol. 167, 183-192
- A Probabilistic Approach to Fast Pattern Matching in Time Series Databases. **E. KEOGH et al.** Proceedings of the Third International Conference on Knowledge Discovery and Data Mining. 14. August 1997, 24-30